# EUROPEAN PATENT APPLICATION

(11) **EP 2 351 704 A1**
(43) Date of publication of application: **03.08.2011**
(21) Application number: 09819283.4
(22) Date of filing: 09.10.2009
(51) Int. Cl.: C01B 31/02, B01F 17/42, B01F 17/52, B01J 13/00

(54) **AQUEOUS DISPERSION OF CARBON MICROFIBERS, PROCESS FOR PRODUCING THE AQUEOUS DISPERSION, AND ARTICLE PRODUCED USING SAME**

(30) Priority: 10.10.2008 JP 2008264264
(71) Applicant: Hodogaya Chemical Co., Ltd., Tokyo 105-0011 (JP)
(72) Inventor: TARUMOTO Naohiro, Tokyo 105-0011 (JP); TAMURA Tomoko, Tokyo 105-0011 (JP); TSUKADA Takayuki, Tokyo 105-0011 (JP)
(74) Representative: Müller-Boré & Partner Patentanwälte
(86) International application number: PCT/JP2009/067673
(87) International publication number: WO 2010/041750

(57) **Abstract**

Upon dispersing fine carbon fibers into water, by using an anionic surfactant having a high electrostatic repulsion effect, an nonionic surfactant having a high stereoscopic repulsion effect, and an anionic surfactant having high electrostatic and stereoscopic repulsion effects, in combination, an aqueous dispersion of fine carbon fibers which shows a high dispersibility without causing significant cohesion of mutual fine carbon fibers, and maintains a mean particle diameter (d₅₀) of not more than 350 nm in a wide concentration range from a relatively low concentration to a relatively high concentration is provided.

## Description

### [Detailed description of the invention]

### [Technical field]

This invention is related to an aqueous dispersion of fine carbon fibers, a method for preparing the aqueous dispersion, and articles using thereof. The aqueous dispersion of fine carbon fibers according to the present invention can be applied to all products which are manufactured by using water as a solvent, for instance, manufacturing of heating source such as heaters used for electrical carpet, floor heating, wall heater, heater for road or roof snow melting system; manufacturing of electroconductive fibers in which the carbon fibers are coated on other fibers; manufacturing of electroconductive paper in accordance with paper making technique; manufacturing of electroconductive glass fiber non-woven fabrics in accordance with non-woven fabric making technique; manufacturing of integrated circuit in accordance with patterning technique and applied development for panel display; etc.

### [Background Arts]

Fine carbon fiber (carbon nanotube) discovered in 1976 is a fine hollow tube having a nanometer order' s diameter which is formed by cylindrically rounding graphenes. In an ideal form thereof, a face of carbon hexagonal net forms a tube which is parallel to the axis of the carbon nanotube, and in some cases, two or more of such tubes may be layered to form double, triple, quadruple, or multiple layers. Such carbon nanotubes show different characteristics mutually depending on the number of hexagonal nets made of carbon, and the diameter of the tube. Thus, the carbon nanotubes are expected to be applied to electrical devices, electrical wiring, material for electrothermal conversion element, material for thermal electric conversion element, radiating material for building material, electromagnetic wave shielding material, radio wave absorbing material, material for field emission cathode of flat display panel, material for contacting electrode, material for resin composition, transparent electroconductive film, material for catalyst carrier, material for electrode and hydrogen storage, reinforcing material, black pigment, etc., with utilizing these chemical characteristics, mechanical characteristics, thermal conductivity, structural characteristics, etc.

However, the fine carbon fibers, typified by carbon nanotubes, show a very strong cohesive force (Van der Waals force) between the fibers mutually. Thus, when such fine carbon fibers are added to an aqueous solution, organic solvent, resinous solution, or resin, the fine carbon fibers tend to cohere mutually, and which is followed by a failure in preparation of a well-dispersed solution or resin under the current circumstances. A major factor for this result is that the smooth surface in atoms level of the carbon nanotube degrades greatly the affinity to the dispersion mediums.

Among the dispersion medium, water is particularly troublesome medium for dispersing the fine carbon fibers. The higher the crystallinity of the fine carbon fibers becomes, the more the affinity of the fine carbon fiber to the water degreases, and it gets to the extent that the fine carbon fibers float on water when they add to water. However, in order to construct the technology taken into consideration to the global warming, and the living environment or global environment, such as the VOC regulation, the technology in which the organic solvent is not used has been demanded, and therefore, it can be said that the aqueous dispersion of the fine carbon fibers is very important technology.

Thus, in recent years many studies for preparing the aqueous dispersion of the fine carbon fibers have been done. For instance, the studies have been published in Non-patent Literatures 1 and 2, and Patent Literatures 1 - 7. In the Non-Patent Literature 1, a method for dispersing carbon nanotubes by using a non-ionic surfactant, Tergitol (trade name) NP7, is disclosed.

In the Non-Patent Literature 2, it is reported that the mono-layered carbon nanotubes are dispersed into an aqueous solution by subjecting mono-layered carbon nanotubes to ultrasonic treatment in a large quantity of cationic surfactant SDS aqueous solution in order that the hydrophobic portions of the surfactant are absorbed to the hydrophobic surfaces of the fine carbon fibers, and thus hydrophilic portions are formed at the outsides of the fibers.

In the Patent Literature 1, a dispersing method is disclosed, in which an amphipathic compound that is a copolymer of styrene and ethylene glycol is used as dispersing agent, and the content of multi-layered carbon nanotubes in the dispersing agent is set to 1 part by weight or less.

In the Patent Literature 2, a dispersion of carbon nanotubes is disclosed, in which (A) carbon nanotubes, (B) hydrophilic liquid, and (C) non-ionic dispersing agent of which amine number is in the range of 5 - 100 mg KOH/g are contained, and wherein the carbon nanotubues are multi-layered carbon nanotubes and their content is 5 parts by weight or less.

In the Patent Literature 3, a hydrophilic dispersion of carbon nanotube is disclosed, which includes (A) carbon nanotubes; (B) a dispersing agent which is an alkyl benzene sulfate or alkyl ether sulfate; and (C) a compound of which hydrophilic portion is hydroxyl group, ethylene oxide, carbon-carbon triple bond, or ionic group, and which has a hydrophobic portion - hydrophilic portion - hydrophobic portion structure. Incidentally, the carbon nanotubues used in this literature are single-layered carbon nanotubes and their content is 1 parts by weight or less.

In the Patent Literature 4, a method for preparing carbon nanotube dispersion is disclosed, wherein carbon nanotubes undergo ultrasonic dispersing treatment with using an aqueous dispersing agent for carbon nanotubes which includes at least one member selected from the group consisting of polymeric aromatic surfactants, aromatic nonionic surfactants, and a combination of an aromatic nonionic surfactant and an ionic surfactant. Incidentally, the carbon nanotubues used in this literature are multi-layered carbon nanotubes and their content is 7.5 parts by weight or less.

In the Patent Literature 5, a method for preparing carbon nanotube dispersing paste is disclosed, wherein amphoteric molecules are attached to at least a part of carbon nanotubes which constitute plural carbon nanotube bundles, and the amphoteric molecules attached to one of the carbon nanotubes which constitute plural carbon nanotube bundles and other amphoteric molecules attached to other carbon nanotubes which constitute plural carbon nanotube bundles adjacent to the former carbon nanotube are electrically attracted each other, thereby the individual carbon nanotubes which constitute plural carbon nanotube bundles are dispersed solely. Incidentally, the carbon nanotubues used in this literature are single-layered carbon nanotubes and their concentration is low.

In the Patent Literature 6, a solubilizing agent for nanocarbon to water is disclosed, wherein the solubilizing agent contains as an effective ingredient a surfactant capable of forming spherical micelles having a diameter of 50 - 2000 nm in water solution or an aqueous polymer having a weight average molecular weight in the range of 10,000 - 50,000,000. Incidentally, this literature is mainly related to the technology for high purification of single-layered carbon nanotubes.

In the Patent Literature 7, network-like nanocarbon aggregate which is obtained by subj ecting minute carbon dispersed medium which contains minute carbon particles of nano- to micro- sizes and a dispersing agent for the minute carbon to drying after applying to hydrophobic smooth substance when the liquid medium is aqueous type, alternatively by subjecting the minute carbon dispersed medium to drying after applying to hydrophilic smooth substance when the liquid medium is nonaqueous type, and optionally rinsing the dispersing agent out after drying.

However, the concentrations of the fine carbon fibers in the fine carbon fiber dispersion disclosed in these literatures are not more than 7.5 parts by weight at the maximum. Further, the dispersions disclosed are not the one that is given in adequate consideration of the application of the dispersion to heating element, electroconductive fiber, etc. Further, there is no suggestion about the method for preparing the dispersion in several kilogram quantities.

### [Earlier Patent Literatures]

### [Patent Literature]

[Patent Literature 1] JP 2005-320220 A
[Patent Literature 2] JP 2007-169121 A
[Patent Literature 3] JP 2003-238126 A
[Patent Literature 4] JP 2005-263608 A
[Patent Literature 5] JP 2007-39623 A
[Patent Literature 6] WO 2004/060798
[Patent Literature 7] JP 2007-182363 A

### [Non-patent Literature]

[Non-patent Literature 1] S.Cui et al. Carbon 41,2003,797-809
[Non-patent Literature 2] Michael J. O' Connel et al. SCIENCE VOL297 26 July 2002,593-596

### [Summary of Invention]

### [Problem to be solved by the invention]

A problem to be solved by the invention is to provide a novel aqueous dispersion of fine carbon fibers, a method for preparing the aqueous dispersion, and articles using thereof, in which the fine carbon fibers added in the dispersion show high homogeneity and good dispersibility in a wide concentration range from a relatively low concentration to a relatively high concentration. Further, the present invention aims to provide an aqueous dispersion of fine carbon fibers which is given in consideration of the kind, combination and adding amount of a surfactant which can disperse fine carbon fibers which show a strong cohesive force to a mean particle diameter (d₅₀) of not more than 350 nm, for instance, at a concentration range of 0.01 - 20 % by weight; a method capable of preparing the dispersion; and articles which are obtained by drying the aqueous dispersion of fine carbon fibers so as to form a good fine carbon fiber film, in which the fine carbon fiber film is applied to heating element, electroconductive fiber, electroconductive paper, electroconductive glass fiber non woven fabric.

### [Means for solving the problem]

We, the inventors, have made diligent studies to solve the above mentioned problem. As a result of the studies, we have found that an aqueous dispersion of fine carbon fibers which shows a high dispersibility without causing significant cohesion of mutual fine carbon fibers which have been added to an aqueous medium, and maintains a mean particle diameter of not more than 350 nm in a wide concentration range from a relatively low concentration to a relatively high concentration can be prepared, and a method for preparing the aqueous dispersion of fine carbon fibers is established, by using an anionic surfactant having a high electrostatic repulsion effect, an nonionic surfactant having a high stereoscopic repulsion effect, and an anionic surfactant having high electrostatic and stereoscopic repulsion effects, in combination. Thus, we have accomplished the present invention. The present invention comprises the following content.

Namely, the present invention is represented by an aqueous dispersion of fine carbon fibers which is characterized in that fine carbon fibers are dispersed in an aqueous solution which contains an anionic surfactant (A) and a nonionic surfactant (B).

Further, the present invention is represented by an aqueous dispersion of fine carbon fibers which is characterized in that fine carbon fibers are dispersed in an aqueous solution which contains an anionic surfactant (A) and an anionic surfactant (C) which has a higher steric hindrance structure than the structure of the anionic surfactant (A).

Further more, the present invention is represented by an aqueous dispersion of fine carbon fibers which is characterized in that fine carbon fibers are dispersed in an aqueous solution which contains an anionic surfactant (A); a nonionic surfactant (B); and an anionic surfactant (C) which has a higher steric hindrance structure than the structure of the anionic surfactant (A).

The present invention is also represented by the above mentioned aqueous dispersions of fine carbon fibers which are characterized in that the concentration of the fine carbon fibers is in the range of 0.01 - 20 % by weight.

The present invention is also represented by the above mentioned aqueous dispersions of fine carbon fibers which are characterized in that the fine carbon fibers are dispersed to the extent that the mean particle diameter (d₅₀) of fine carbon fibers is not more than 350 nm.

Still more, the present invention is represented by the above mentioned aqueous dispersions of fine carbon fibers which are characterized in that the anionic surfactant (A) is an anionic surfactant having no benzyl skeleton.

In addition, the present invention is represented by the above mentioned aqueous dispersions of fine carbon fibers which are characterized in that the anionic surfactant (A) is at least one anionic surfactant having no benzyl skeleton selected from the group consisting of alkyl ester sulfates and derivatives thereof, polyoxyethylene alkyl ether sulfates and derivatives thereof, sulfosuccinates and derivatives thereof, amide ether sulfates and derivatives thereof, taurine derivatives, sarcosine derivatives, aryl sulfonates and derivatives, reactive surfactants, fatty acid salts, polyoxyethylene alkylether phosphates, alkenyl succinates and derivatives thereof, naphthyl sulfonates and derivatives thereof, formal condensates of naphthalene sulfonates and derivatives thereof, polystyrene sulfonates and derivatives thereof, polycarboxylates and derivatives thereof.

The present invention is further represented by the above mentioned aqueous dispersions of fine carbon fibers which are characterized in that the anionic surfactant (A) comprises at least one of polyoxyethylene alkyl ether sulfates or derivatives thereof.

The present invention is also represented by the above mentioned aqueous dispersions of fine carbon fibers which are characterized in that the anionic surfactant (A) comprises at least one of polycondensate type aninonic surfactants.

The present invention is also represented by the above mentioned aqueous dispersions of fine carbon fibers which are characterized in that the anionic surfactant (A) is a formal condensate of naphthalene sulfonates or a derivative thereof.

Further, the present invention is represented by the above mentioned aqueous dispersions of fine carbon fibers which are characterized in that the nonionic surfactant (B) is at least one member selected from the group consisting of polyoxyethylene alkyl ethers and derivatives thereof, polyoxyethylene styrenated phenyl ethers and derivatives thereof, formal condensates of polyoxyethylene styrenated phenyl ethers and derivatives thereof, polyoxyalkylene derivatives, alkylol amide type, polyethylene glycol fatty acid esters, glycerin esters, P.O. E. glycerin esters, P.O.E. glycerin esters, sorbitan fatty acid esters, polyoxyethylene sorbitan fatty acid esters, reactive surfactants, sorbitan fatty acid esters, polyoxyethylene sorbitan fatty acid esters, polyoxyethylene sorbitol fatty acid esters, glycerin fatty acid esters, polyoxyethylene fatty acid esters, polyoxyethylene hydrogenated caster oils, polyoxyethylene alkyl amines, alkyl alkanolamides, polyethylene glycols.

Further, the present invention is represented by the above mentioned aqueous dispersions of fine carbon fibers which are characterized in that the nonionic surfactant (B) comprises at least one of ethyleneoxide group - containing nonionic surfactants.

Furthermore, the present invention is represented by the above mentioned aqueous dispersions of fine carbon fibers which are characterized in that the nonionic surfactant (B) is a polyoxyethylene alkyl ether or a derivative thereof.

Further, the present invention is represented by the above mentioned aqueous dispersions of fine carbon fibers which are characterized in that the nonionic surfactant (B) comprises at least one of compounds represented by the following general formula (1):

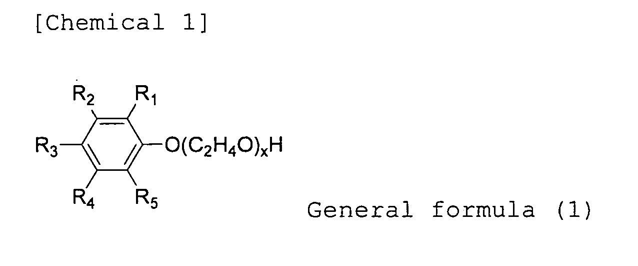

[wherein R₁ - R₅ represent hydrogen atom, non-substituted or substituted alkyl group having 1 - 30 carbon atoms, hydroxyl group, non-substituted or substituted hydroxyalkyl group, non-substituted or substituted 1-phenyl-ethyl group, or non-substituted or substituted benzyl group, mutually independently; the number of hydrogen atom(s) substituted to R₁ - R₅ is 0 to 4; and X represents the average number of moles of EO and is in the range of 1 - 100.].

Further, the present invention is represented by the above mentioned aqueous dispersions of fine carbon fibers which are characterized in that the nonionic surfactant (B) comprises at least one of compounds which have a structural unit represented by the following general formula (2):

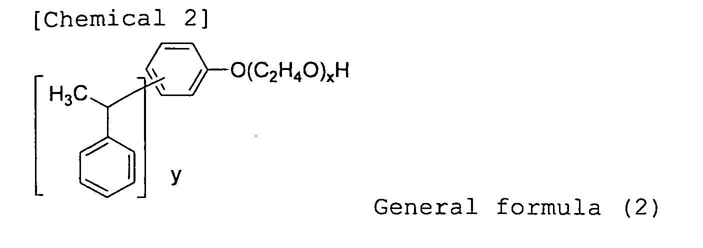

[wherein X represents the average number of moles of EO and is in the range of 1 - 100; and y represents the number of substitution and is in the range of 1 - 3.].

Further, the present invention is represented by the above mentioned aqueous dispersions of fine carbon fibers which are characterized in that the nonionic surfactant (B) comprises at least one of compounds which have a structural unit represented by the following general formula (3):

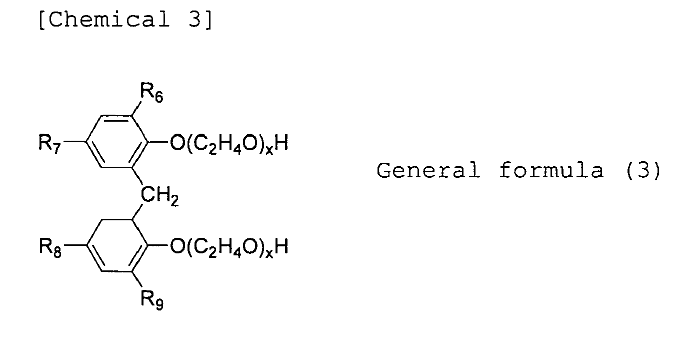

[wherein R₆ - R₉ represent hydrogen atom, non-substituted or substituted alkyl group having 1 - 30 carbon atoms, hydroxyl group, non-substituted or substituted hydroxyalkyl group, or non-substituted or substituted 1-phenyl-ethyl group, mutually independently; the number of hydrogen atom(s) substituted to R₆ - R₉ is 0 to 4; and X represents the average number of moles of EO and is in the range of 1 - 100.].

Further, the present invention is represented by the above mentioned aqueous dispersion of fine carbon fibers which is characterized in that the anionic surfactant (C) is a benzyl skeleton - containing anionic surfactant.

Furthermore, the present invention is represented by the above mentioned aqueous dispersion of fine carbon fibers which is characterized in that the anionic surfactant (C) is a benzyl skeleton - containing sulfate ester salt type anionic surfactant.

Furthermore, the present invention is represented by the above mentioned aqueous dispersion of fine carbon fibers which is characterized in that the anionic surfactant (C) comprises at least one of compounds which have a structural unit represented by the following general formula (4):

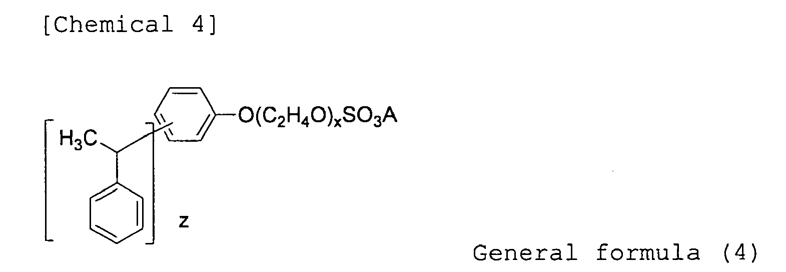

[wherein A represents sodium, potassium, or ammonium, X represents the average number of moles of EO and is in the range of 1 - 100; and z represents the number of substitution and is in the range of 1 - 3.].

Further, the present invention is represented by the above mentioned aqueous dispersions of fine carbon fibers which are characterized in that at least one of coloring agent, deforming agent and water-soluble polymer is further added to the aqueous dispersions of fine carbon fibers.

Further, the present invention is represented by the above mentioned aqueous dispersions of fine carbon fibers which are characterized in that the fine carbon fibers comprise fine carbon fibers having a mean fiber diameter in the range of 0.5 - 200 nm.

Further, the present invention is represented by the above mentioned aqueous dispersions of fine carbon fibers which are characterized in that the fine carbon fibers are single-layered fine carbon fibers, double-layered fine carbon fibers or multi-layered fine carbon fibers.

Further, the present invention is represented by the above mentioned aqueous dispersions of fine carbon fibers which are characterized in that the fine carbon fibers are carbon fibrous structures each of which comprises a three dimensional network of carbon fibers, each of the carbon fibers having an fiber diameter of 15 - 130 nm, wherein the carbon fibrous structure further comprises a granular part, at which the carbon fibers are bound in a state that the carbon fibers are extended outwardly therefrom, and wherein the granular part is produced in a growth process of the carbon fibers, and has a size of not less than 1.3 times of the fiber diameter of the fine carbon fiber.

The present invention is also represented by an article to which electroconductivity is given by treating it with the above mentioned aqueous dispersions of fine carbon fibers and thus allowing it to contain the fine carbon fibers on its surface and/or in its interior.

The present invention is also represented by a method for preparing the above mentioned aqueous dispersions of fine carbon fibers which is characterized in that the method comprises a step of subjecting the fine carbon fibers to dispersing treatment or disintegrating treatment with the anionic surfactant (A), and a further step of subjecting the fine carbon fibers to another dispersing treatment on the condition of adding the nonionic surfactant (B) or the anionic surfactant (C) which has a higher steric hindrance structure than the structure of the anionic surfactant (A).

The present invention is further represented by a method for preparing the above mentioned aqueous dispersions of fine carbon fibers which is characterized in that the fine carbon fibers undergo the another dispersing treatment on the condition of adding the nonionic surfactant (B) or the anionic surfactant (C) which has a higher steric hindrance structure than the structure of the anionic surfactant (A), after the fine carbon fibers undergo the step of the dispersing treatment or disintegrating treatment with the anionic surfactant (A) and a step of obtaining aqueous solution in which the fine carbon fibers are recohered.

The present invention is also represented by a method for preparing the above mentioned aqueous dispersions of fine carbon fibers which is characterized in that the method comprises a step of subjecting the fine carbon fibers to dispersing treatment or disintegrating treatment with the anionic surfactant (A), and a further step of subjecting the fine carbon fibers to another dispersing treatment on the condition of adding the nonionic surfactant (B) and the anionic surfactant (C) which has a higher steric hindrance structure than the structure of the anionic surfactant (A).

The present invention is further represented by a method for preparing the above mentioned aqueous dispersions of fine carbon fibers which is characterized in that the fine carbon fibers undergo the another dispersing treatment on the condition of adding the nonionic surfactant (B) and the anionic surfactant (C) which has a higher steric hindrance structure than the structure of the anionic surfactant (A), after the fine carbon fibers undergo the step of the dispersing treatment or disintegrating treatment with the anionic surfactant (A) and a step of obtaining aqueous solution in which the fine carbon fibers are recohered.

The present invention is also represented by a method for preparing the above mentioned aqueous dispersions of fine carbon fibers which is characterized in that the method comprises a step of subjecting the fine carbon fibers to dispersing treatment or disintegrating treatment with the anionic surfactant (A) and the nonionic surfactant (B) or the anionic surfactant (C) which has a higher steric hindrance structure than the structure of the anionic surfactant (A), and a further step of subjecting the fine carbon fibers to another dispersing treatment on the condition of adding the anionic surfactant (C) or the nonionic surfactant (B).

The present invention is further represented by a method for preparing the above mentioned aqueous dispersions of fine carbon fibers which is characterized in that the fine carbon fibers undergo the another dispersing treatment on the condition of adding the anionic surfactant (C) or the nonionic surfactant (B), after the fine carbon fibers undergo the step of the dispersing treatment or disintegrating treatment with the anionic surfactant (A) and the nonionic surfactant (B) or the anionic surfactant (C) which has a higher steric hindrance structure than the structure of the anionic surfactant (A) and a step of obtaining aqueous solution in which the fine carbon fibers are recohered.

The present invention is also represented by a method for preparing the above mentioned aqueous dispersions of fine carbon fibers which is characterized in that the method comprises a step of subjecting the fine carbon fibers to dispersing treatment or disintegrating treatment with the anionic surfactant (A) and the nonionic surfactant (B) or the anionic surfactant (C) which has a higher steric hindrance structure than the structure of the anionic surfactant (A).

The present invention is also represented by a method for preparing the above mentioned aqueous dispersions of fine carbon fibers which is characterized in that the method comprises a step of subjecting the fine carbon fibers to dispersing treatment or disintegrating treatment with the anionic surfactant (A) and the nonionic surfactant (B) and the anionic surfactant (C) which has a higher steric hindrance structure than the structure of the anionic surfactant (A).

Herein, the "aqueous dispersion" denotes a liquid wherein the object to be dispersed is dispersed in an aqueous system (solvent system main ingredient of which is water).

### [Effect of the invention]

Since the aqueous dispersion of fine carbon fibers and method for preparing thereof according to the present invention can be prepared with a various concentration of the fine carbon fibers ranging from low concentration to high concentration, they can be applied to various applied products in accordance with demanded electrical properties. Therefore, it can be applied to all products which are manufactured by using water as a solvent, for instance, heating sources such as heaters used for electrical carpet, floor heating, wall heater, heater for road or roof snow melting system; electroconductive fibers in which the carbon fibers are coated on other fibers; electroconductive papers in accordance with paper making technique; electroconductive glass fiber non-woven fabrics in accordance with non-woven fabric making technique; integrated circuits in accordance with patterning technique and applied development for panel display; electro-magnetic interference sealed materials and radio wave absorbing materials; electroconductive inks used for ink-jet, printing, and stationery, etc.

### [Brief description of the drawings]

[Fig. 1] is an optical microscopic photograph which indicates dispersing condition of aqueous dispersion of fine carbon fibers which was prepared in Example 1 discussed later.
[Fig. 2] is an optical microscopic photograph which indicates dispersing condition of aqueous dispersion of fine carbon fibers which was prepared in Example 2 discussed later.
[Fig. 3] is an optical microscopic photograph which indicates dispersing condition of aqueous dispersion of fine carbon fibers which was prepared in Example 3 discussed later.
[Fig. 4] is an optical microscopic photograph which indicates dispersing condition of aqueous dispersion of fine carbon fibers which was prepared in Example 4 discussed later.
[Fig. 5] is an optical microscopic photograph which indicates dispersing condition of aqueous dispersion of fine carbon fibers which was prepared in Example 5 discussed later.
[Fig. 6] is an optical microscopic photograph which indicates dispersing condition of aqueous dispersion of fine carbon fibers which was prepared in Example 6 discussed later.
[Fig. 7] is an optical microscopic photograph which indicates dispersing condition of aqueous dispersion of fine carbon fibers which was prepared in Example 7 discussed later.
[Fig. 8] is an optical microscopic photograph which indicates dispersing condition of aqueous dispersion of fine carbon fibers which was prepared in Example 8 discussed later.
[Fig. 9] is an optical microscopic photograph which indicates dispersing condition of aqueous dispersion of fine carbon fibers which was prepared in Example 9 discussed later.
[Fig. 10] is an optical microscopic photograph which indicates dispersing condition of aqueous dispersion of fine carbon fibers which was prepared in Example 10 discussed later.
[Fig. 11] is an optical microscopic photograph which indicates dispersing condition of aqueous dispersion of fine carbon fibers which was prepared in Example 11 discussed later.
[Fig. 12] is an optical microscopic photograph which indicates dispersing condition of aqueous dispersion of fine carbon fibers which was prepared in Example 12 discussed later.
[Fig. 13] is an optical microscopic photograph which indicates dispersing condition of aqueous dispersion of fine carbon fibers which was prepared in Example 13 discussed later.
[Fig. 14] is an optical microscopic photograph which indicates dispersing condition of aqueous dispersion of fine carbon fibers which was prepared in Example 14 discussed later.
[Fig. 15] is an optical microscopic photograph which indicates dispersing condition of aqueous dispersion of fine carbon fibers which was prepared in Example 15 discussed later.
[Fig. 16] is an optical microscopic photograph which indicates dispersing condition of aqueous dispersion of fine carbon fibers which was prepared in Example 16 discussed later.
[Fig. 17] is an optical microscopic photograph which indicates dispersing condition of aqueous dispersion of fine carbon fibers which was prepared in Example 17 discussed later.
[Fig. 18] is an optical microscopic photograph which indicates dispersing condition of aqueous dispersion of fine carbon fibers which was prepared in Example 18 discussed later.
[Fig. 19] is an optical microscopic photograph which indicates dispersing condition of aqueous dispersion of fine carbon fibers which was prepared in Example 19 discussed later.
[Fig. 20] is an optical microscopic photograph which indicates dispersing condition of aqueous dispersion of fine carbon fibers which was prepared in Example 20 discussed later.
[Fig. 21] is an optical microscopic photograph which indicates dispersing condition of aqueous dispersion of fine carbon fibers which was prepared in Example 21 discussed later.
[Fig. 22] is an optical microscopic photograph which indicates dispersing condition of aqueous dispersion of fine carbon fibers which was prepared in Example 22 discussed later.
[Fig. 23] is an optical microscopic photograph which indicates dispersing condition of aqueous dispersion of fine carbon fibers which was prepared in Example 23 discussed later.
[Fig. 24] is an optical microscopic photograph which indicates dispersing condition of aqueous dispersion of fine carbon fibers which was prepared in Example 24 discussed later.
[Fig. 25] is an optical microscopic photograph which indicates dispersing condition of aqueous dispersion of fine carbon fibers which was prepared in Example 25 discussed later.
[Fig. 26] is an optical microscopic photograph which indicates dispersing condition of aqueous dispersion of fine carbon fibers which was prepared in Example 26 discussed later.
[Fig. 27] is an optical microscopic photograph which indicates dispersing condition of aqueous dispersion of fine carbon fibers which was prepared in Example 27 discussed later.
[Fig. 28] is an optical microscopic photograph which indicates dispersing condition of aqueous dispersion of fine carbon fibers which was prepared in Example 28 discussed later.
[Fig. 29] is an optical microscopic photograph which indicates dispersing condition of aqueous dispersion of fine carbon fibers which was prepared in Example 29 discussed later.
[Fig. 30] is an optical microscopic photograph which indicates dispersing condition of aqueous dispersion of fine carbon fibers which was prepared in Example 30 discussed later.
[Fig. 31] is an optical microscopic photograph which indicates dispersing condition of aqueous dispersion of fine carbon fibers which was prepared in Example 31 discussed later.
[Fig. 32] is an optical microscopic photograph which indicates dispersing condition of aqueous dispersion of fine carbon fibers which was prepared in Example 32 discussed later.
[Fig. 33] is an optical microscopic photograph which indicates dispersing condition of aqueous dispersion of fine carbon fibers which was prepared in Example 33 discussed later.
[Fig. 34] is an optical microscopic photograph which indicates dispersing condition of aqueous dispersion of fine carbon fibers which was prepared in Example 34 discussed later.
[Fig. 35] is an optical microscopic photograph which indicates dispersing condition of aqueous dispersion of fine carbon fibers which was prepared in Example 35 discussed later.
[Fig. 36] is an optical microscopic photograph which indicates dispersing condition of aqueous dispersion of fine carbon fibers which was prepared in Control 1 discussed later.
[Fig. 37] is an optical microscopic photograph which indicates dispersing condition of aqueous dispersion of fine carbon fibers which was prepared in Control 2 discussed later.
[Fig. 38] is an optical microscopic photograph which indicates dispersing condition of aqueous dispersion of fine carbon fibers which was prepared in Control 3 discussed later.
[Fig. 39] is an optical microscopic photograph which indicates dispersing condition of aqueous dispersion of fine carbon fibers which was prepared in Control 4 discussed later.
[Fig. 40] (A) - (D) are optical microscopic photographs which indicate time elapsed stability of dispersing condition of aqueous dispersion of fine carbon fibers which was prepared in Example 28 discussed later, wherein (A), (B), (C) and (D) indicate the dispersing condition just after preparing the dispersion, the dispersing condition at 1 month after preparing the dispersion, the dispersing condition at 3 months after preparing the dispersion, the dispersing condition at 6 months after preparing the dispersion, respectively.

### [Embodiments for carrying out of the invention]

Now, the present invention will be described in detail with reference to some embodiments.
The aqueous dispersion of fine carbon fibers according to the present invention is characterized in that it becomes possible to disperse stably the fine carbon fibers with a high concentration into water for a long time by diligent studies of kind, combination, adding amount and adding order of surfactants to be used, and it is possible to form an excellent film of fine carbon fibers by drying the aqueous dispersion of fine carbon fibers.

The aqueous dispersion of fine carbon fibers according to the present invention is accomplished by using a combination of an anionic surfactant (A), a nonionic surfactant (B) and an anionic surfactant (C) which has a higher steric hindrance structure than the structure of the anionic surfactant (A) in order to disperse fine carbon fibers in water.

In the present invention, when classifying the surfactants which are used in combination in accordance with their effects, they are divided into the anionic surfactant (A) having a high electrostatic repulsion effect, the nonionic surfactant (B) having a high stereoscopic repulsion effect, and the anionic surfactant (C) having a high electrostatic and stereoscopic repulsion effect.

Herein, regarding the fine carbon fibers as the material to be dispersed which is used on the preparation of the dispersion, it is known that there is a tendency of showing varied general characteristics and varied physical property in accordance with the difference in their preparation methods. For instance, the fine carbon fibers prepared by the substrate method usually have many entanglements among them, and form bundle structures in a part of them. On the other hand, the fine carbon fibers prepared by the CVD method form network-like fine carbon fibrous structures which are constituted with the fine carbon fibers, although they have a lesser number of entanglements among them. Further, since the fine carbon fibers possess a low bulk density, the fine carbon fibers often undergo granulation in order to heighten the bulk density and enhance the efficiency of materials handling. Thus, since the commercially available fine carbon fibers form the bundle structures thereof, entanglements among the fine carbon fibers, or network-like fine carbon fibrous structure, and they are the ones that have further undergone granulation, it is well known that it is difficult to disperse the fine carbon fibers into water. In addition, even if the fine carbon fibers can be dispersed to the extent of near isolated dispersion, it is also well known that the dispersed particles show a high cohesiveness because the fine carbon fibers are nanofibers.

In order to disperse fine carbon fibers which are hardly dispersed into water in view of nanoscopic, microscopic, and macroscopic scales, the dispersion treatment method which is found out by the present invention is practiced by two-step dispersing treatment in which the kind, combination, and adding amount of surfactants which have mutually different functions are optimized. At the first step, the anion surfactant (A) mainly functions so as to pulverize and disentangle the fine carbon fibers which have the entanglements among them and the network-like structure, and which were granulated, in cooperation with the mechanical pulverizing and dispersing treatment. At the second step, the nonionic surfactant (B) and/or the anionic surfactant (C) function so as to bring the fine carbon fibers to stable dispersing condition as they repress the cohesion of the disentangled fine carbon fibers.

In order to realize the above mentioned function, as the anionic surfactant (A) which is used for preparing the aqueous dispersion of fine carbon fibers, the one that is of a relatively small molecular size, that is not high bulky stereoscopically, that possesses a high permeability to the fine carbon fibers, and that has a chemical structure which shows a high electrostatic repulsion effect, is selected. The anionic surfactant (A), however, has a low effect on contributing the dispersion stability, although it has the advantage of highly aiding the disentanglement as described above. Thus, when the anionic surfactant (A) is used solely, the disentangled fine carbon fibers would form reaggregates.

Then, in order to redisperse the reaggregates formed from the disentangled fine carbon fibers and keep the dispersed state stably for a long time, as the nonionic surfactant (B) and the anionic surfactant (C), the nonionic surfactant that is of a relatively large molecular size, that is high bulky stereoscopically, that possesses a high permeability to the fine carbon fibers, and that shows a high stereoscopic repulsion effect, and the anionic surfactant that is of a relatively large molecular size, that is high bulky stereoscopically, that possesses a high permeability to the fine carbon fibers, and that shows both of high electrostatic effect and stereoscopic repulsion effect, are selected. As described above, the present invention is characterized in that an aqueous dispersion of fine carbon fibers where the fine carbon fibers are dispersed in water can be prepared by utilizing the anionic surfactant (A), the nonionic surfactant (B) and the anionic surfactant (C) in combination, wherein these surfactants have mutually different functions.

Further, since the film properties of the fine carbon fiber film which is obtained by drying the aqueous dispersion of the fine carbon fibers depend on the physical properties of the surfactants used, it is well known that the fine carbon fiber film which is obtained by using an aromatic, polycondensed, or polymerized type anionic surfactant solely, is so hard that crazing occurs, and thus does not become a good fine carbon fiber film. Therefore, the present invention is also characterized in that a good fine carbon fiber film can be manufactured by utilizing the anionic surfactant (A), the nonionic surfactant (B) and the anionic surfactant (C) in combination, wherein these surfactants have mutually different chemical structures.

Now, the materials used in the present invention will be described in detail.
As the fine carbon fibers which are used in the aqueous dispersion of fine carbon fibers according to the present invention, single-layered, double-layered, triple-layered, quadruple-layered and multi-layered carbon nanotubes can be enumerated, and they may be appropriately selected for use in accordance with the purpose of the dispersion to be prepared. Preferably, the multi-layered carbon nanotube is used in the present invention.

As the multi-layered carbon nanotube, the one that is three-dimensional network structure is preferable. This multi-layered carbon nanotube structure is characterized in that the structure comprises a granular part, and plural multi-layered carbon nanotubes which are mutually independently extended outwardly from the granular parts so that these multi-layered carbon nanotubes are bound mutually by the granular part.

As the multi-layered carbon nanotubes which have the above mentioned network structure, a multi-layered carbon nanotube structure which is characterized in that the structure comprises plural granular parts, and plural multi-layered carbon nanotubes which are mutually independently extended outwardly from their respective granular parts, wherein the multi-layered carbon nanotubes show a three dimensional expansion in all; and the structure shows a three dimensional network structure of the multi-layered carbon nanotubes at least in a part by a state that at least a part of the multi-layered carbon nanotubes extended from one granular part are linked with another granular part is desirable.

Incidentally, with respect to the carbon fibers, the condition of being "extended outwardly" from the granular part used in this specification, means principally that the carbon fibers and granular part are linked together by carbon crystalline structural bonds as mentioned above, i.e., that the granular part shares the same graphene sheets of multi-layered structure with the carbon fibers, but does not mean that they are apparently combined together by any additional binding agent (involving carbonaceous ones).

Further, the words of "showing a three dimensional expansion in all" used in this specification mean such a structure in which that plural number of multi-layered carbon nanotubes are individually elongated from a granular part in mutually independent directions, wherein the state of the elongation is that the plural number of multi-layered carbon nanotubes are extended from the granular part as a base point in a three dimensional space.

As for the multi-layered carbon nanotube structure, it is preferable that the mean fiber outside diameter of the multi-layered carbon nanotubes which are included in the structure is in the range of more than 20 nm and not more than 300 nm.

In addition, when the multi-layered carbon nanotube structure has a state that at least a part of the multi-layered carbon nanotubes which are elongated from a granular part is also connected to another granular part so as to connect two granular parts to each other, it is desirable that the length of the multi-layered carbon nanotube which connects a granular part from which the multi-layered carbon nanotube is elongated to the adjacent granular part, that is, the distance between the adjacent granular parts is about 2.0 - 50 µm, more preferably, about 3.0 - 20 µm. The distance between adjacent granular parts used herein is determined by measuring distance from the center of a granular part to the center of another granular part which is adjacent the former granular part.

Furthermore, it is preferable that the circle-equivalent mean outside diameter of the granular parts is 1.3 times or more times larger than the mean fiber outside diameter of the multi-layered carbon nanotubes, preferably, 1.5 - 5.0 times larger. By virtue of such a firm bonding, the multi-layered carbon nanotubes are configured as the three dimensional network, and thus formed multi-layered carbon nanotube structure maintains its configure even after dispersed into an aqueous medium.

In order to enhance the strength and electrical conductivity of the above mentioned carbon fibrous structure, it is desirable that the graphene sheets that make up the multi-layered carbon nanotube of the structure have a small number of defects, and more specifically, for example, the I_{D}/I_{G} ratio of the carbon nanotubes determined by Raman spectroscopy is not more than 0.2, more preferably, not more than 0.1. Here, in the Raman spectroscopic analysis, with respect to a large single crystal graphite, only the peak (G band) at 1580 cm⁻¹ appears. When the crystals are of finite ultrafine sizes or have any lattice defects, the peak (D band) at 1360 cm⁻¹ can appear. Therefore, when the intensity ratio (R=I₁₃₆₀/I₁₅₈₀=I_{D}/I_{G}) of the D band and the G band is below the selected range as mentioned above, it is reasonable to say that there is little defect in graphene sheets.

Incidentally, the "defect" described herein denotes the incomplete portion of atomic arrangement of the graphene sheet (lattice defect) which is caused by the entry of unnecessary atom as an impurity, the lack of necessary carbon atom, or the misalignment of the carbon atom, etc., into the atomic arrangement of the graphene sheet which constitutes the intermediate or the like.

Further, it is preferable that the above mentioned multi-layered carbon nanotube structure has a specific surface of 10 - 60 m²/g. When the specific surface exceeds 60 m²/g, the outer diameters of the multi-layered carbon nanotube would become thinner, and the dispersion of the structures to the matrix or the like would become difficult. On the contrary, when the specific surface is less than 10 m²/g, since the number of the multi-layered carbon nanotubes per a unit amount is too low, it becomes hardly possible to obtain an article of high electrical conductivity by adding a small dosage of the multi-layered carbon nanotube structures to the aqueous dispersion and drying the aqueous dispersion to form a film.

As for the method for producing the carbon nanotubes, there is no particular limitation, and it is possible to utilize any known method, such as the vapor phase growth method using catalyst, the arc discharging method, the laser evaporation method, the HiPco process (High-pressure carbon monoxide process), etc.

For instance, a process for producing single-layered carbon nanotubes in accordance with the laser evaporation method is indicated below.
As raw materials, a mixed lot of graphite powder, and nickel and cobalt fine powder was prepared. This mixed lot was heated to 1250 °C under argon atmosphere at 665 hPa (500 Torrs) in an electric furnace, and the second harmonic pulses of Nd:YAG laser of 350 mJ/Pulse were irradiated to there, thereby the carbon and the metal fine powder were allowed to evaporate in order to be able to produce single-layered carbon nanotubes.

The above mentioned process is disclosed only as a typical example, and the kind of metal, the kind of gas, the temperature of the electrical furnace, the wavelength of the laser may be varied as appropriate. In addition, it is also possible to use single-layered carbon nanotubes which are obtained by any method other than the laser evaporation method, for instance, the HiPco process, the vapor phase growth method, the arc discharging method, the thermal decomposition method of carbon monoxide, the template method where organic molecules are inserted into fine pores and allowed to decompose thermally, the fullerene and metal coevaporation method, etc.

For instance, a process for producing double-layered carbon nanotubes in accordance with the constant temperature arc discharging method is indicated below.
A surface treated Si substrate was used as a substrate, and the treatment was performed by immersing alumina powder into a solution where catalyst metal and catalytic aid metal are dissolved for 30 minutes, dispersing the alumina powder in the solution by ultrasonic treatment for 3 hours, coating thus obtained dispersed solution to the Si substrate, and then maintaining and drying the coated Si substrate in air at 120 °C. Then, the substrate was set into a reaction chamber of a carbon nanotube manufacturing equipment, a mixed gas of hydrogen and methane was used as a reactive gas, the gas supplying amounts for hydrogen and methane were set to 500 sccm and 10 sccm, respectively, and the pressure of the reaction chamber was set to 70 Torrs. A stick type discharging part was used as cathode part. Then, D.C. voltage was applied between the anode part and the cathode part and between the anode part and the substrate, and the discharge voltage was controlled so as to keep the discharge current constant at 2.5 A. When the temperature of the cathode part reached 2300 °C by the discharge, the transition from the normal glow discharge state to the abnormal glow discharge state was caused. Then, the state that the discharge current was 2.5 A, the discharge voltage was 700 V and the temperature of reactive gas was 3000 °C was kept for 10 minutes in order to be able to produce single-layered carbon nanotubes and double-layered carbon nanotubes on the whole of the substrate.

The above mentioned process is disclosed only as a typical example, and the kind of metal, the kind of gas, and the other conditions may be varied as appropriate. In addition, it is also possible to use single-layered carbon nanotubes which are obtained by any method other than the arc discharging method.

For instance, a method for manufacturing the multi-layered carbon nanotubes according to the vapor phase growing method is described as follows. Basically, an organic compound such as a hydrocarbon is chemical thermally decomposed through the CVD process in the presence of ultrafine particles of a transition metal as a catalyst in order to obtain fibrous structures (hereinafter referred to as "intermediate"), and then the obtained intermediate undergoes a high temperature heating treatment. Thereby, the multi-layered carbon nanotubes can be produced.

As a raw material organic compound, hydrocarbons such as benzene, toluene, xylene; carbon monoxide (CO); and alcohols such as ethanol may be used. It is preferable, but not limited, to use as carbon sources at least two carbon compounds which have different decomposition temperatures. Incidentally, the words "at least two carbon compounds" used herein not only include two or more kinds of raw materials, but also include one kind of raw material that can undergo a reaction, such as hydrodealkylation of toluene or xylene, during the course of synthesis of the fibrous structure such that in the subsequent thermal decomposition procedure it can function as at least two kinds of carbon compounds having different decomposition temperatures.

When as the carbon sources at least two kinds of carbon compounds are provided in the thermal decomposition reaction system as described above, the decomposition temperatures of individual carbon compounds may be varied not only by the kinds of the carbon compounds, but also by the gas partial pressures of individual carbon compounds, or mole ratio between the compounds. Therefore, as the carbon compounds, a relatively large number of combinations can be used by adjusting the composition ratio of two or more carbon compounds in the raw gas.

For example, the fibrous structure (intermediate) can be prepared by using two or more carbon compounds in combination, while adjusting the gas partial pressures of the carbon compounds so that each compound performs mutually different decomposition temperature within a selected thermal decomposition reaction temperature range, and/or adjusting the residence time for the carbon compounds in the selected temperature region, wherein the carbon compounds to be selected are selected from the group consisting of alkanes or cycloalkanes such as methane, ethane, propanes, butanes, pentanes, hexanes, cyclopropane, cyclohexane, particularly, alkanes having 1 -7 carbon atoms; alkenes or cycloolefin such as ethylene, propylene, butylenes, pentenes, heptenes, cyclopentene, particularly, alkenes having 1 - 7 carbon atoms; alkynes such as acetylene, propyne, particularly, alkynes having 1 - 7 carbon atoms; aromatic or heteroaromatic hydorocarbons such as benzene, toluene, styrene, xylene, naphthalene, methyl naphtalene, indene, phenanthrene, particularly, aromatic or heteroaromatic hydorocarbons having 6 -18 carbon atoms; alcohols such as methanol, ethanol, particularly, alcohols having 1 -7 carbon atoms; and other carbon compounds involving such as carbon monoxide, ketones, ethers. Further, to optimize the mixing ratio can contribute to the efficiency of the preparation.

When a combination of methane and benzene is utilized among such combinations of two or more carbon compounds, it is desirable that the mole ratio of methane/benzene is 1 - 600, preferably, 1.1 - 200, and more preferably 3 -100. The ratio is for the gas composition ratio at the inlet of the reaction furnace. For instance, when as one of carbon sources toluene is used, in consideration of the matter that 100% of the toluene decomposes into methane and benzene in proportions of 1:1 in the reaction furnace, only a deficiency of methane may be supplied separately. For example, in the case of adjusting the methane / benzene mole ratio to 3, 2 mol methane may be added to 1 mol toluene. As the methane to be added to the toluene, it is possible to use the methane which is contained as an unreacted form in the exhaust gas discharged from the reaction furnace, as well as a fresh methane specially supplied.

Using the composition ratio within such a range, it is possible to obtain the fibrous structure (intermediate) in which both the multi-layered carbon nanotube parts and granular parts are efficiently developed, and which show the three-dimensional network structure.

Inert gases such as argon, helium, xenon; and hydrogen may be used as an atmosphere gas.

A mixture of transition metal such as iron, cobalt, molybdenum, or transition metal compounds such as ferrocene, metal acetate; and sulfur or a sulfur compound such as thiophene, ferric sulfide; may be used as a catalyst.

The intermediate may be synthesized using a CVD process with hydrocarbon or etc., which has been conventionally used in the art. The steps may comprise gasifying a mixture of hydrocarbon and a catalyst as a raw material, supplying the gasified mixture into a reaction furnace along with a carrier gas such as hydrogen gas, etc., and undergoing thermal decomposition at a temperature in the range of 800 °C - 1300 °C. By following such synthesis procedures, the product obtained is an aggregate, which is of several to several tens of centimeters in size and which is composed of plural carbon nanotube structures (intermediates), each of which has a three dimensional configuration where multi-layered carbon nanotubes each having 15 - 100 nm in outside diameter are bound together by a granular part that has grown around the catalyst particle as the nucleus.

The thermal decomposition reaction of the hydrocarbon raw material mainly occurs on the surface of the catalyst particles or on growing surface of granular parts that have grown around the catalyst particles as the nucleus, and the fibrous growth of carbon may be achieved when the recrystallization of the carbons generated by the decomposition progresses in a constant direction. However, when the balance between the thermal decomposition rate and the carbon fiber growth rate is intentionally varied, namely, for instance, as mentioned above, when using as carbon sources at least two kinds of carbon compounds having different decomposition temperatures, the carbonaceous material is allowed to grow three dimensionally around the granular part as a centre, rather than in one dimensional direction. The three dimensional growth of the carbon nanotubes depends not only on the balance between the thermal decomposition rate and the growing rate, but also on the selectivity of the crystal face of the catalyst particle, residence time in the reaction furnace, temperature distribution in the furnace, etc. Generally, when the growing rate is faster than the decomposition rate, the carbon material tends to grow into fibers, whereas when the thermal decomposition rate is faster than the growing rate, the carbon material tends to grow in peripheral directions of the catalyst particle. Accordingly, by changing the balance between the thermal decomposition rate and the growing rate intentionally, it is possible to control the growth of carbon material to occur in multi-direction rather than in single direction, and to produce the three dimensional structures. In order to form the above mentioned three-dimensional configuration, where the fibers are bound together by the granular part in the intermediate, with ease, it is desirable to optimize the compositions such as the catalyst used, the residence time in the reaction furnace, the reaction temperature and the gas temperature.

With respect to the method for preparing the multi-layered nanotube structure (intermediate) with efficiency, as another approach to the aforementioned one that two or more carbon compounds which have mutually different decomposition temperature are used in an appropriate mixing ratio, there is an approach that the raw material gas supplied into the reaction furnace from a supply port is forced to form a turbulent flow in proximity to the supply port. The "turbulent flow" used herein means a furiously irregular flow, such as flow with vortexes.

In the reaction furnace, immediately after the raw material gas is supplied into the reaction furnace from the supply port, metal catalyst fine particles are produced by the decomposition of the transition metal compound as the catalyst involved in the raw material gas. The production of the fine particles is carried out through the following steps. Namely, at first, the transition metal compound is decomposed to make metal atoms, then, plural number of, for example, about one hundred of metal atoms come into collisions with each other to create a cluster. At the created cluster state, it cannot function as a catalyst for the multi-layered nanotube structure. Then, the clusters are further aggregated by collisions with each other to grow into a metal crystalline particle of about 3 - 10 nm in size, and which particle comes into use as the metal catalyst fine particle for producing the multi-layered nanotube structure (intermediate).

During the catalyst formation process as mentioned above, if the vortex flows belonging to the furiously turbulent flow are present, it is possible that the collisions of carbon atoms or collisions of clusters become more vigorously as compared with the collisions only due to the Brownian movement of atoms or collisions, and thus the collision frequency per unit time is enhanced so that the metal catalyst fine particles are produced within a shorter time and with higher efficiency. Further, Since concentration, temperature, and etc. are homogenized by the force of vortex flow, the obtained metal catalyst fine particles become uniform in size. Additionally, during the process of producing metal catalyst fine particles, a metal catalyst particles' aggregate in which numerous metal crystalline particles was aggregated by vigorous collisions with the force of vortex flows can be also formed. Since the metal catalyst particles are rapidly produced as mentioned above, the decomposition of carbon compound can be accelerated so that an ample amount of carbonaceous material can be provided. Whereby, the multi-layered carbon nanotubes grow up in a radial pattern by taking individual metal catalyst particles in the aggregate as nuclei. When the thermal decomposition rate of a part of carbon compounds is faster than the growing rate of the carbon material as previously described, the carbon material may also grow in the circumferential direction so as to form the granular part around the aggregate, and thus the multi-layered nanotube structure (intermediate) of the desired three dimensional configuration may be obtained with efficiency.
Incidentally, it may be also considered that there is a possibility that some of the metal catalyst fine particles in the aggregate are ones that have a lower activity than the other particles or ones that are deactivated on the reaction. If non-fibrous or very short fibrous carbon material layers grown by such catalyst fine particles before or after the catalyst fine particles aggregate are present at the circumferential area of the aggregate, the granular part of the precursor may be formed.
Thus, the granular part comprises plural end parts of multi-layered carbon nanotubes and plural metal catalyst fine particles from which carbonaceous material grown only in the circumferential direction. In many cases, the granular part which binds the multi-layered carbon nanotubes together shows a shape of an aggregated or integrated configuration of plural sphere articles rather than a simple sphere shape. Further, since the growth of the carbonaceous material is continued under such an aggregated or integrated configuration, and this fact is in cooperation with the annealing treatment mentioned below, any adjacent members among the plural end parts of the multi-layered carbon nanotubes and plural sphere articles which are aggregated or integrated in the granular part form and own jointly a continuous graphene sheet-like layer (or layers). As a result, a carbon nanotube structure in which plural multi-layered carbon nanotubes are mutually tightly fixed with the granular part(s) and which is shaped like a three dimensional network is generated.

It is preferable that the temperature of the introduced raw material gas near the raw material gas supply port of the reaction furnace is in the range of 350 -450 °C.
The concrete means for creating the turbulence to the raw material gas flow is not particularly limited. For example, it is adaptable to provide some type of collision member at a position where the raw material gas flow introduced from the supply port can be interfered by the collision section. The shape of the collision member is not particularly limited, as far as an adequate turbulent flow can be formed in the reaction furnace by the vortex flow which is created at the collision member as the starting point. For example, embodiments where various shapes of baffles, paddles, tapered tubes, umbrella shaped elements, etc., are used singly or in varying combinations and located at one or more positions may be adaptable.

The intermediate, obtained by heating the mixture gas of the catalyst and hydrocarbon at a constant temperature in the range of 800 °C - 1300°C, has a structure that resembles sheets of carbon atoms laminated together. When analyzed with Raman spectroscopy, the D band of the intermediate is very large and many defects are observed. Further, the obtained intermediate is associated with unreacted raw materials, nonfibrous carbon, tar moiety, and catalyst metal.

Therefore, the intermediate is subjected to a high temperature heat treatment of 1500 - 3000 °C using a proper method in order to remove such residues from the intermediate and to produce the intended carbon nanotube structure with few defects.

For instance, the intermediate may be heated at 800 - 1300 °C to remove the unreacted raw material and volatile flux such as the tar moiety, and thereafter annealed at a high temperature of 1500 - 3000 °C to produce the intended structure and, concurrently, to vaporize the catalyst metal, which is included in the fibers, to remove it from the fibers. In this process, it is possible to add a reducing gas or a small amount of carbon monoxide into the inert gas atmosphere to protect the substance structure.

By annealing the intermediate at a temperature in the range of 1500 - 3000 °C, the patch-like sheets of carbon atoms are rearranged to associate mutually and then form multiple graphene sheet-like layers.

It is preferable to use carbon nanotubes which contain a tar moiety of not more than 0.5 %. When using carbon nanotubes containing little amount of impurities such as tar on manufacturing an article such as heating source, electroconductive paper, electroconductive fibers, etc., with using the aqueous dispersion of fine carbon fibers according to the present invention, it is possible to reduce releases of volatile organic compounds (VOC), and thus, there is an advantage from the viewpoint of health and environment. For this purpose, it is also possible to utilize the carbon nanotubes which underwent the annealing treatment of the above mentioned temperature condition.

Further, after or before such a high temperature heat treatment, the carbon nanotube structures may be subjected to crushing in order to obtain carbon nanotube structures, each having an area-based circle-equivalent mean diameter of several centimeters. Then, the obtained carbon nanotube structures may be subjected to pulverization in order to obtain the carbon nanotube structures having an area-based circle-equivalent mean diameter of 50 - 100 µm. Thereby, the carbon nanotube structures having a desired area-based circle-equivalent mean diameter are obtained.

The above mentioned process is disclosed only as a typical example, and the kind of metal, the kind of gas, and the other conditions may be varied as appropriate. In addition, it is also possible to use multi-layered carbon nanotubes which are obtained by any method other than the vapor phase growth method.

Adding amount of the fine carbon fibers to the water in the aqueous dispersion of the fine carbon fibers according to the present invention is in the range of 0.01 - 20 % by weight. It is an advantage of the present invention that the fine carbon fibers can be dispersed with such a high concentration in the aqueous dispersion as compared with the cases of using surfactants known in the art. When the concentration of the fine carbon fibers can be set at a high value, it becomes possible to decrease the number of coatings on forming a coating layer having a prescribed thickness with using the aqueous dispersion. Further, it also becomes possible to form a thickened coating layer. This also brings an advantage of providing a heating layer showing a high heating efficiency and firmness on manufacturing a sheet heater or the like. In addition, it is possible to provide a product having a high content of fine carbon fibers on coating fibers or the like with the aqueous dispersion of fine carbon fibers. Still more, since the fine carbon fibers are the material having a low bulk specific gravity, the attainment of a high concentration of the carbon fibers in the aqueous dispersion can contribute to a cost reduction on the transport of the fine carbon fibers. Further, when the aqueous dispersion contains the fine carbon fibers with a high concentration, the aqueous dispersion can be diluted as needed. Incidentally, since the aqueous dispersion of the fine carbon fiber according to the present invention was able to be prepared by dispersing the several types of fine carbon fibers which are provided from mutually different companies, it can be said that the aqueous dispersion of the fine carbon fiber according to the present invention is able to disperse various types (e.g., three-dimensional network structure types, Cup-Stacked types, Herringbone types, etc.) and various mean diameters of fine carbon fibers.

The aqueous dispersion according to the present invention can maintain the dispersed condition for several weeks to a half year even when it is stored under still standing condition after preparation. That is, the formation of reagglomeration of fine carbon fibers or the like is very rare. Even when the sedimentation of fine carbon fibers is caused by storage over the long term, a good dispersive condition can be ensured only by agitating the aqueous dispersion with a simple agitating devise.

The anionic surfactant (A) which is used for preparing a solution in which disentangled fine carbon fibers which underwent disentangling treatment in water forms reaggregate, and which has a high electrostatic repulsion effect and a high affinity for the fine carbon fibers will be exemplified as follows, but it is not limited thereto. As for the anionic surfactant (A), it is desired to be the one that has a relatively small molecular size, that is not high bulky stereoscopically, that possesses a high permeability to the fine carbon fibers, and that has a chemical structure which shows a high electrostatic repulsion effect. Concretely, for instance, anionic surfactants (A) having no benzyl skeleton, such as alkyl ester sulfates and derivatives thereof, polyoxyethylene alkyl ether sulfates and derivatives thereof, sulfosuccinates and derivatives thereof, amide ether sulfates and derivatives thereof, taurine derivatives, sarcosine derivatives, aryl sulfonates and derivatives thereof, reactive surfactants, fatty acid salts, polyoxyethylene alkyl ether phosphates, alkenyl succinates and derivatives thereof, naphthyl sulfonates and derivatives thereof, formal condensates of naphthalene sulfonates and derivatives thereof, polystyrene sulfonates and derivatives thereof, polycarboxylates and derivatives thereof may be enumerated.

Although it is not particularly limited, it is desirable that the mean molecular weight (Mn) of the anionic surfactant (A) is, for instance, in the range of not more than 5000, more preferably, in the range of 500 - 3000.
Among the surfactants as exemplified above, polyoxyethylene alkyl ether sulfates and derivatives thereof, naphthyl sulfonates and derivatives thereof, and formal condensates of naphthalene sulfonates and derivatives thereof are desirable, more particularly, naphthyl sulfonates and derivatives thereof, and formal condensates of naphthalene sulfonates and derivatives thereof are desirable. Regarding the polyoxyethylene alkyl ether sulfates and derivatives thereof, it is desirable that the alkyl group in the molecule has a carbon number in the range of 5 - 30, and the mole number of the ethylene oxide group is in the range of 1 - 10. Regarding the formal condensates of naphthalene sulfonates and derivatives thereof, it is desirable that the mean degree of condensation is in the range of 1 - 20, preferably, in the range of 3 - 15, and more preferably, in the range of 4 - 10.

In the case that polyoxyethylene alkyl ether sulfate or a derivative thereof is used as the anionic surfactant (A) which is used for preparing a solution in which disentangled fine carbon fibers which underwent disentangling treatment in water forms reaggregate, and which has a high electrostatic repulsion effect and a high affinity for the fine carbon fibers, the trade names thereof will be exemplified as follows, but it is not limited thereto. For instance, Alscope TH-330 (manufactured by TOHO Chemical Industry Co., Ltd.), Alscope NS-230 (manufactured by TOHO Chemical Industry Co., Ltd.), Alscope TH-370N (manufactured by TOHO Chemical Industry Co., Ltd.), Alscope DA-330S (manufactured by TOHO Chemical Industry Co., Ltd.), Alscope N-335T(manufactured by TOHO Chemical Industry Co., Ltd.), Alscope A-225B (manufactured by TOHO Chemical Industry Co., Ltd.), HITENOL NF-08 (manufactured by DAI-ICHI KOGYO SEIYAKU Co. , Ltd.), HITENOL NF-0825 (manufactured by DAI-ICHI KOGYO SEIYAKU Co., Ltd.), HITENOL NF-13 (manufactured by DAI-ICHI KOGYO SEIYAKU Co., Ltd.), HITENOL NF-17 (manufactured by DAI-ICHI KOGYO SEIYAKU Co., Ltd.), HITENOL XJ-16 (manufactured by DAI-ICHI KOGYO SEIYAKU Co., Ltd.), HITENOL XJ-630S (manufactured by DAI-ICHI KOGYO SEIYAKU Co., Ltd.), HITENOL PS-06 (manufactured by DAI-ICHI KOGYO SEIYAKU Co., Ltd.), HITENOL PS-15 (manufactured by DAI-ICHI KOGYO SEIYAKU Co., Ltd.), HITENOL 330T (manufactured by DAI-ICHI KOGYO SEIYAKU Co., Ltd.), HITENOL TM-07 (manufactured by DAI-ICHI KOGYO SEIYAKU Co., Ltd.), HITENOL 227L (manufactured by DAI-ICHI KOGYO SEIYAKU Co., Ltd.), HITENOL 325L (manufactured by DAI-ICHI KOGYO SEIYAKU Co., Ltd.), HITENOL LA-10 (manufactured by DAI-ICHI KOGYO SEIYAKU Co., Ltd.), HITENOL LA-12 (manufactured by DAI-ICHI KOGYO SEIYAKU Co., Ltd.), HITENOL LA-16 (manufactured by DAI-ICHI KOGYO SEIYAKU Co., Ltd.), HITENOL 325SM (manufactured by DAI-ICHI KOGYO SEIYAKU Co., Ltd.), HITENOL 08E (manufactured by DAI-ICHI KOGYO SEIYAKU Co., Ltd.), HITENOL 18E (manufactured by DAI-ICHI KOGYO SEIYAKU Co., Ltd.), HITENOL W-2320 (manufactured by DAI-ICHI KOGYO SEIYAKU Co., Ltd.), EMAL 20C (manufactured by KAO Corporation), EMAL E-27C (manufactured by KAO Corporation), EMAL 270J (manufactured by KAO Corporation), EMAL 20CM (manufactured by KAO Corporation), EMAL D-3-D (manufactured by KAO Corporation), EMAL D-4-D (manufactured by KAO Corporation), LATEMUL E-118D (manufactured by KAO Corporation), LEVENOL E-150(manufactured by KAO Corporation), LATEMUL WX (manufactured by KAO Corporation), EMAL 20T (manufactured by KAO Corporation), etc., are enumerated.

In the case that formal condensate of naphthalene sulfonate or a derivative thereof is used as the anionic surfactant (A) which is used for preparing a solution in which disentangled fine carbon fibers which underwent disentangling treatment in water forms reaggregate, and which has a high electrostatic repulsion effect and a high affinity for the fine carbon fibers, the trade names thereof will be exemplified as follows, but it is not limited thereto. For instance, Lunox 1000C(manufactured by TOHO Chemical Industry Co., Ltd.), FT-500(manufactured by DENKI KAGAKU KOGYO KABUSHIKI KAISHA), Disper-TL (manufactured by MEISEI CHEMICAL WORKS, Ltd.), Lavelin FM-45 (manufactured by DAI-ICHI KOGYO SEIYAKU Co., Ltd.), Lavelin FH-P (manufactured by DAI-ICHI KOGYO SEIYAKU Co., Ltd.), Lavelin F-45 (manufactured by DAI-ICHI KOGYO SEIYAKU Co., Ltd.), DEMOL N (manufactured by KAO Corporation), DEMOL RN (manufactured by KAO Corporation), DEMOL T (manufactured by KAO Corporation), POLITY 100K (manufactured by LION Corporation), etc., are enumerated.

Adding amount of the anionic surfactant (A) which is used for preparing a solution in which disentangled fine carbon fibers which underwent disentangling treatment in water forms reaggregate is in the range of 5 - 100 % by weight, preferably, in the range of 7 - 50 % by weight, and more preferably, in the range of 10 - 30 % by weight, based on the weight of fine carbon fibers. When the amount of the anionic surfactant is less than 5 % by weight, the prescribed aqueous solution cannot be obtained. When the amount of the anionic surfactant is more than 100 % by weight, the additional effect in larger dose can be expected no longer, but only the formation of micelle structure among the surfactant's molecules is enhanced. Further, in the case of manufacturing articles with using the aqueous dispersion of fine carbon fibers, when the amount of the anionic surfactant (A) is more than 100 % by weight and naphthyl sulfonate or a derivative thereof, or formal condensate of naphthalene sulfonates or a derivative thereof is used as the anionic surfactant (A), the CNT contained film which is obtained after drying water comes to a hard and brittle film like a polystyrene resin film, and thus the prescribed film cannot be obtained. In this invention, it is possible to produce a durable film which has a thickness of not more than 20 µm. Further, this film manufacturing method can bring a success in providing fine carbon fibers of a high concentration to the film.

The nonionic surfactant (B) which is used for preparing the aqueous dispersion of fine carbon fibers, and which has a high stereoscopic repulsion effect will be exemplified as follows, but it is not limited thereto. As for the nonionic surfactant (B), it is desired to be the one that has a relatively large molecular size, that is high bulky stereoscopically, that possesses a high permeability to the fine carbon fibers, and that has a chemical structure which shows a high stereoscopic repulsion effect. Concretely, for instance, polyoxyethylene alkyl ethers and derivatives thereof, polyoxyethylene styrenated phenyl ethers and derivatives thereof, formal condensates of polyoxyethylene styrenated phenyl ethers and derivatives thereof, polyoxyalkylene derivatives, alkylol amide type, polyethylene glycol fatty acid esters, glycerin esters, P.O.E. glycerin esters, P.O.E. glycerin ester, sorbitan fatty acid esters, polyoxyethylene sorbitan fatty acid esters, reactive surfactants, sorbitan fatty acid esters, polyoxyethylene sorbitan fatty acid esters, polyoxyethylene sorbitol fatty acid esters, glycerin fatty acid esters, polyoxyethylene fatty acid esters, polyoxyethylene hydrogenated caster oils, polyoxyethylene alkyl amines, alkyl alkanolamides, polyethylene glycols, etc., may be enumerated.

Although it is not particularly limited, it is desirable that the mean molecular weight (Mn) of the nonionic surfactant (B) is, for instance, in the range of not more than 10000, more preferably, in the range of 2000 - 5000.

Among the surfactants as exemplified above, polyoxyethylene alkyl ethers and derivatives thereof, polyoxyethylene styrenated phenyl ethers and derivatives thereof, and, formal condensates of polyoxyethylene styrenated phenyl ethers and derivatives thereof, are particularly desirable. Further, the compounds which have one of the structural units represented by the above mentioned general formulae (1) - (3) is more desirable. Regarding the polyoxyethylene alkyl ethers and derivatives thereof, it is desirable that both of the length of polyoxyethylene group in the molecular and the length of alkyl group in the molecular are lengthened, for instance, it is preferable that the alkyl group in the molecular has a carbon number of not less than 5, and the mole number of ethylene oxide groups is in the range of 5 - 500.

Regarding the polyoxyethylene styrenated phenyl ethers and derivatives thereof represented by the general formula (2), it is desirable that the average EO mole number (X) of ethylene oxide groups is in the range of 1 - 100, preferably, in the range of 3 -50, and more preferably, in the range of 4 - 40. Regarding the number of substitution (y), it is preferable to be in the range of 1 - 3. The trade names of them will be exemplified as follows, but it is not limited thereto.

Regarding the polyoxyethylene styrenated phenyl ethers and derivatives thereof represented by the general formula (2), for instance, SORPOL T-10 (manufactured by TOHO Chemical Industry Co., Ltd., y=3, X=9), SORPOL T-15 (manufactured by TOHO Chemical Industry Co., Ltd., y=3, X=14), SORPOL T-20 (manufactured by TOHO Chemical Industry Co., Ltd., y=3, X=19), SORPOL T-26 (manufactured by TOHO Chemical Industry Co., Ltd., y=3, X=24), SOPPOL T-32 (manufactured by TOHO Chemical Industry Co., Ltd., y=3, X=30), SORPOL T-18D (manufactured by TOHO Chemical Industry Co., Ltd., y=2, X=12), EMULGEN A-60 (manufactured by KAO Corporation, y=2, X=15), EMULGEN A-90 (manufactured by KAO Corporation, y=2, X=20), EMULGEN A-500 (manufactured by KAO Corporation, y=2, X=50), EMULGEN B-66 (manufactured by KAO Corporation, y=3), NOYGEN EA-87 (manufactured by DAI-ICHI KOGYO SEIYAKU Co., Ltd.), NOYGEN EA-137 (manufactured by DAI-ICHI KOGYO SEIYAKU Co., Ltd.), NOYGEN EA-157 (manufactured by DAI-ICHI KOGYO SEIYAKU Co., Ltd.), NOYGEN EA-167 (manufactured by DAI-ICHI KOGYO SEIYAKU Co., Ltd.), NOYGEN EA-177 (manufactured by DAI-ICHI KOGYO SEIYAKU Co., Ltd.), NOYGEN EA-197D (manufactured by DAI-ICHI KOGYO SEIYAKU Co., Ltd.), NOYGEN EA-207D (manufactured by DAI-ICHI KOGYO SEIYAKU Co., Ltd.), etc., are enumerated.

Regarding the formal condensates of polyoxyethylene styrenated phenyl ethers and derivatives thereof represented by the general formula (3), it is desirable that the average EO mole number of ethylene oxide groups is in the range of 10 - 50, preferably, in the range of 15 -45, and more preferably, in the range of 20 - 40. Regarding R₆ - R₉, non-substituted or substituted 1-phenyl-ethyl group is particularly desirable. The trade names of them will be exemplified as follows, but it is not limited thereto.

Regarding the formal condensates of polyoxyethylene styrenated phenyl ethers and derivatives thereof represented by the general formula (3), for instance, SORPOL F-15 (manufactured by TOHO Chemical Industry Co., Ltd., X=9, R₆ - R₉ = 1-phenyl-ethyl groups), SORPOL F-19 (manufactured by TOHO Chemical Industry Co., Ltd., X=26, R₆ - R₉ = 1-phenyl-ethyl groups), SORPOL F-24 (manufactured by TOHO Chemical Industry Co., Ltd., X=34, R₆ - R₉ = 1-phenyl-ethyl groups), SORPOL F-27 (manufactured by TOHO Chemical Industry Co. , Ltd. , X=38, R₆ - R₉= 1-phenyl-ethyl groups),, etc., are enumerated.

Adding amount of the nonionic surfactant (B) in the aqueous dispersion of fine carbon fiber according to the present invention is in the range of 5 - 100 % by weight, preferably, in the range of 10 - 60 % by weight, and more preferably, in the range of 20 - 50 % by weight, based on the weight of fine carbon fibers. When the amount of the nonionic surfactant is less than 5 % by weight, the prescribed aqueous dispersion of fine carbon fibers cannot be obtained. When the amount of the nonionic surfactant is more than 100 % by weight, the additional effect in larger dose can be expected no longer, but only the formation of micelle structure among the surfactant's molecules is enhanced.

Further, as for the nonionic surfactant (B) , two or more kinds of the nonionic surfactants may be mixed and added in combination, for instance, a polyoxyethylene alkyl ether or a derivative thereof, and one of compounds represented by the general formulae (1) - (3) may be mixed and added to the solution in which disentangled fine carbon fibers which underwent disentangling treatment in water forms reaggregate.

The anionic surfactant (C) which is used for preparing the aqueous dispersion of fine carbon fibers and which is the compound that differs from the anionic surfactant (A) will be exemplified as follows, but it is not limited thereto. As for the anionic surfactant (C) , it is desired to be the one that shows both of the electrostatic repulsion effect and the stereoscopic repulsion effect, and it is selected from the ones each of which molecular structure has a higher order steric hindrance structure (hindered structure) than that of the anionic surfactant (A), and which can exhibit the steric hindrance effect, namely, the stereoscopic repulsion effect, owing to the molecular structure. For instance, it is possible to use an anionic surfactant which has more sterically hindering substituent group(s), such as cyclic, three-dimensionally branched, or long chained group, as side chain(s) of its chemical structure, preferably, has plural numbers of such substituent groups, as compared with that of the anionic surfactant (A). More concretely, for instance, anionic surfactants which have benzyl skeleton(s), particularly, sulfate ester salt type anionic surfactants which have benzyl skeleton(s) are enumerated.

Although it is not particularly limited, it is desirable that the mean molecular weight (Mn) of the anionic surfactant (C) is, for instance, in the range of not more than 10000, more preferably, in the range of 2000 - 5000.

Particularly preferably, polyoxyethylene alkyl ether sulfates and derivatives thereof, which are represented by the above mentioned general formula (4), are enumerated. Further, as for the anionic surfactant (C) , two or more kinds of the anionic surfactants may be mixed and added in combination.

As the anionic surfactant (C) which is used for preparing the aqueous dispersion of fine carbon fibers, for instance, SORPOL T-10SPG (manufactured by TOHO Chemical Industry Co., Ltd., X=9, Z=3), SORPOL T-15SPG (manufactured by TOHO Chemical Industry Co., Ltd., X=14, Z=3), SORPOL 7290P (manufactured by TOHO Chemical Industry Co., Ltd., X=14, Z=3), SORPOL T-20SPG (manufactured by TOHO Chemical Industry Co., Ltd., X=19, Z=3), SORPOL 7953 (manufactured by TOHO Chemical Industry Co., Ltd., X=14, Z=3), SORPOL 7917B (manufactured by TOHO Chemical Industry Co., Ltd., X=19, Z=3), SORPOL 7948 (manufactured by TOHO Chemical Industry Co., Ltd., X=33, Z=3), SORPOL 7556 (manufactured by TOHO Chemical Industry Co., Ltd., X=12, Z=2), HITENOL NF-08 (manufactured by DAI-ICHI KOGYO SEIYAKU Co., Ltd.), HITENOL NF-0825 (manufactured by DAI-ICHI KOGYO SEIYAKU Co., Ltd.), HITENOL NF-13 (manufactured by DAI-ICHI KOGYO SEIYAKU Co., Ltd.), HITENOL NF-17 (manufactured by DAI-ICHI KOGYO SEIYAKU Co., Ltd.), EMULGEN A-60 (manufactured by KAO Corporation, X=15, Z=2), EMULGEN A-90 (manufactured by KAO Corporation, X=20, Z=2), EMULGEN A-500 (manufactured by KAO Corporation, X=50, Z=2), EMULGEN B-66 (manufactured by KAO Corporation, X=50), etc., are enumerated.

Adding amount of the anionic surfactant (C) in the aqueous dispersion of fine carbon fiber according to the present invention is in the range of 5 - 100 % by weight, preferably, in the range of 10 - 60 % by weight, and more preferably, in the range of 20 - 50 % by weight, based on the weight of fine carbon fibers. When the amount of the anionic surfactant is less than 5 % by weight, the prescribed aqueous dispersion of fine carbon fibers cannot be obtained. When the amount of the anionic surfactant is more than 100 % by weight, the additional effect in larger dose can be expected no longer, but only the formation of micelle structure among the surfactant's molecules is enhanced.

As coloring agent which may be added to the aqueous dispersion of carbon fiber according to the present invention, inorganic pigments and organic pigments are enumerated, regardless of whether it is natural or synthesized. As the inorganic pigment, for instance, white inorganic pigments such as anatase-type titanium, rutile-type titanium, zinc white, lithopone, white lead, basic lead sulfate, antimony white, etc.; red inorganic pigments such as cadmium red, molybdenum orange, etc.; brown inorganic pigments such as red oxide, umber, etc, ; yellow inorganic pigments such as chrome yellow, iron oxide yellow, titanium yellow, etc.; green inorganic pigments such as chrome green, chrome oxide green, etc.; blue inorganic pigments such as ultramarine blue, iron blue, etc.; black inorganic pigments such as carbon black, graphite, iron oxide black, etc.; and the like are enumerated. As the organic pigment, for instance, red organic pigments such as quinacridone red, thioindigo maroon, permanent carmine FB, permanent F5R, permanent red 4R, BON maroon light, etc.; orange organic pigments such as indanthrene brilliant orange GR, etc.; yellow organic pigments such as flavanthrone yellow, Hansa yellow, benzidine yellow, etc.; green organic pigments such as nickel azo yellow, copper phthalocyanine green, etc.; blue organic pigments such as copper phthalocyanine blue, indanthrone blue, etc.; violet organic pigments such as dioxazine violet, etc. ; black organic pigments such as aniline black, etc.; and the like are enumerated. As pigments, for instance, calcium carbonate, talc, clay, barium sulfate, white carbon, filling powder, etc., are also enumerated.

As defoaming agent which may be added to the aqueous dispersion of carbon fiber according to the present invention, silicon defoamers; or organic defoamers such as vinyl type, polyether type, higher alcohol type, and organic triphospate ester, etc.; are enumerated. As defoaming agent, for instance, PLONAL EM series (manufactured by TOHO Chemical Industry Co., Ltd.), DEFOMAX series (manufactured by TOHO Chemical Industry Co., Ltd.), PLONAL A series (manufactured by TOHO Chemical Industry Co., Ltd.), PLONAL P-805 (manufactured by TOHO Chemical Industry Co., Ltd.), PLONAL EX-150 (manufactured by TOHO Chemical Industry Co., Ltd.), Unisol AF(manufactured by Nippon Yuka Kogyo Co., Ltd.), SH200 (manufactured by Dow Corning Toray Co., Ltd.), DKQ1-049 (manufactured by Dow Corning Toray Co., Ltd.), etc., are enumerated.

As water-soluble polymer which may be added to the aqueous dispersion of carbon fiber according to the present invention, for instance, natural polymers such as gum arabic, carrageenan, guar gum, Locust bean gum, pectin, tragacanth, corn starch, xanthan gum, dextrin, gelatin, casein, chondroitin sulfate, ethyl cellulose, carboxy methyl cellulose, hydroxy ethyl cellulose, hydroxy propyl cellulose, methyl cellulose, nitro cellulose, cationic cellulose, phosphorylated starch, alginates, propylene glycol alginate, cationic guar gum, hyaluronates, etc.; and synthetic polymers such as polyacrylates, carboxyvinyl polymers, polyacrylic amides, acryl amide - acrylate copolymers, polyvinyl pyrrolidone, polyvinyl alcohols, PVP - VA copolymers, polyethylene glycols, etc.; are enumerated.

As water used for the aqueous dispersion of carbon fiber according to the present invention, for instance, tap water, distilled water, deionized water, etc., are enumerated. As a solvent, for instance, hydrophilic solvent for dissolving the surfactants such as methanol, ethanol, ethylene glycol, propylene glycol, glycerin, etc., may be contained.

As additives which may be added to the aqueous dispersion of carbon fiber according to the present invention, for instance, fillers, whiskers, thickeners, anti-settling agents, UV inhibitors, wetting agents, emulsifiers, anti-skinning agents, polymerization inhibitor, anti-sagging agents, pH adjusting agents, anti-flooding agents, leveling agents, drying agents, anti-drying agents, curing agents, curing accelerators, plasticizers, fire resistant / anti-firing agents, preservatives, anti-fungal / anti-mold agents, antibacterial agents, pesticides, marine antifouling agents, metal surface treating agents, rust removing agents, degreasing agents, chemical conversion coating agents, bleaches, wood sealers, filling agents, sanding sealers, sealers, cement filler- of resin-containing cement pastes, etc., are enumerated.

As dispersing device which is used for preparing the aqueous dispersion of fine carbon fibers according to the present invention, ordinarily available dispersing devices may be used. For instance, beads mill disperser (DYNO-MILL, available from Shinmaru Enterprises Corporation), T.K. LABODISPER, T.K. FILMIX, T.K. PIPELINE MIXER, T.K. HOMOMIC LINE MILL, T.K. HOMOJETTER, T.K. UNI MIXER, T.K. HOMOMIC LINE FLOW, T.K. AGI HOMO DISPER (the products up to this are available from Tokushu Kika Kogyo Co., Ltd), HOMOGENIZER POLYTRON (available from Central Scientific Commerce Inc.), HOMOGENIZER HYSTRON (available from Nichion Medical and Scientific Instruments Co., Ltd.), BIOMIXER (available from Nippon Seiki Seisakusho Co., Ltd.), TURBO TYPE AGITATOR (available from Kodaira Seisakusho Co., Ltd.), ULTRADISPER (available from Asada Tekko Co. , Ltd. ) , EBARA MILDER (available from Ebara Corporation) , ultrasonic device or ULTRASONIC CLEANER (available from AS ONE Corporation), etc., are enumerated. Among them, beads mill disperser (DYNO-MILL, available from Shinmaru Enterprises Corporation) is particularly desirable.

The method for preparing the aqueous dispersion of fine carbon fibers according to the present invention comprises a step of preparing aqueous solution in which the anionic surfactant (A) having the high electrostatic repulsion effect is dissolved; a step of preparing fine carbon fiber dispersion which is obtained by adding fine carbon fibers into the aqueous solution and thereby allowing the anionic surfactant (A) having the high electrostatic repulsion effect to permeate the fine carbon fibers; a step of obtaining an aqueous solution where refined and isolatedly dispersed fine carbon fibers form reaggregates after the fine carbon fiber dispersion undergoes a disentangle step of using the beads mill disperser or other disperser mentioned above in order to disentangle the fine carbon fiber aggregates where the fine carbon fibers are entangled mutually and in aggregate condition; a step of further adding the nonionic surfactant (B) having the high stereoscopic repulsion effect or the anionic surfactant (C) having the high electrostatic repulsion effect and the high stereoscopic repulsion effect to the solution; and a step of preparing the aqueous dispersion of fine carbon fibers where the solution undergoes further dispersing treatment (which is corresponding to the second dispersing treatment claimed in claims) of using the disperser under the condition that the nonionic surfactant (B) having the high stereoscopic repulsion effect or the anionic surfactant (C) having the high electrostatic repulsion effect and the high stereoscopic repulsion effect are added, in order to disentangle the reaggregates of the fine carbon fibers and disperse uniformly fine carbon fibers each of which is in isolated condition. As described above, the present invention has been accomplished by also focusing attention on contriving dispersing steps.

As shown partially in above description, typical combinations of the surfactants using the first dispersing step and the second dispersing step of the present invention are enumerated as follows:
1) a combination of the anionic surfactant (A) for the first dispersing step, and the nonionic surfactant (B) for the second dispersing step;
2) a combination of the anionic surfactant (A) for the first dispersing step, and the anionic surfactant (C) for the second dispersing step;
3) a combination of the anionic surfactant (A) for the first dispersing step, and the nonionic surfactant (B) and the anionic surfactant (C) for the second dispersing step;
4) a combination of the anionic surfactant (A) and the nonionic surfactant (B) for the first dispersing step, and the nonionic surfactant (B) for the second dispersing step;
5) a combination of the anionic surfactant (A) and the nonionic surfactant (B) for the first dispersing step, and the anionic surfactant (C) for the second dispersing step;
6) a combination of the anionic surfactant (A) and the anionic surfactant (C) for the first dispersing step, and the anionic surfactant (C) for the second dispersing step;
7) a combination of the anionic surfactant (A) and the anionic surfactant (C) for the first dispersing step, and the nonionic surfactant (B) for the second dispersing step;
8) combinations of using two or more of the nonionic surfactants, and/or two or more of the anionic surfactants in the above combinations 1) - 7).

In the method for preparing the aqueous dispersion of fine carbon fibers according to the present invention, when the anionic surfactant (A) is used alone at the first dispersing step, the isolatedly disentangled fine carbon fibers come to form reaggregates. However, when the nonionic surfactant (B) or the anionic surfactant (C) is allowed to coexist with the anionic surfactant (A) at the first step, there are cases that the reaggregates cannot be observed because the formed reaggregates become lesser in diameter with the progress of partially isolation of fibers from the reaggregates owing to the presence of the nonionic surfactant (B) or the anionic surfactant (C). Therefore, the present invention is not necessarily limited to the formation of reaggregates after the first dispersing step.

The procedures where the first dispersing step and the second dispersing step are progressed in that order have been described above as the method for preparing the aqueous dispersion of fine carbon fibers according to the present invention. Depending on the combination and the adding amounts of the anionic surfactant (A), the nonionic surfactant (B), and the anionic surfactant (C) which differs from the anionic surfactant (A), however, it also becomes possible to prepare an aqueous solution of fine carbon fibers where the fine carbon fibers are adequately dispersed by a similar mechanism, in the solution where these surfactants are mixed in accordance with prescribed kinds and prescribed combination as well as the prescribed adding amounts, without progressing the first dispersing step and the second dispersing step in order. That is, when the kinds, combination and adding amounts are optimized, it is possible to proceed the dispersion of fine carbon fibers with a similar way in 9) an aqueous solution where the anionic surfactant (A), and the nonionic surfactant (B) or the anionic surfactant (C) which differs from the anionic surfactant (A) exist. Also, when the kinds, combination and adding amounts are optimized, ditto for 10) an aqueous solution where the anionic surfactant (A), the nonionic surfactant (B) and the anionic surfactant (C) which differs from the anionic surfactant (A) exist.

As for the kinds, combination, adding amounts, and adding order of the anionic surfactant (A), the nonionic surfactant (B) and the anionic surfactant (C) which differs from the anionic surfactant (A), it is preferable to select or determine them in accordance with the adding concentration of the fine carbon fibers.

For instance, when preparation of an aqueous dispersion of fine carbon fibers having a low concentration of fine carbon fibers, that is in the range of not more than 1.5 % by weight, is intended, the intended aqueous dispersion of fine carbon fiber can be readily prepared by any of the above mentioned procedures 1) - 8). When preparation of an aqueous dispersion of fine carbon fibers having a mid concentration of fine carbon fibers, that is in the range of 1.5 % - 3.0 % by weight, is intended, it is preferable to proceed in accordance with one of the above mentioned procedures 1) - 4). Namely, in the case of preparing the aqueous dispersion of fine carbon fibers having the mid concentration, the aqueous solution in which the reaggregates are formed from the isolatedly disentangled fine carbon fibers shows a high viscosity at the first dispersing step. Thus, when the nonionic surfactant (B) having the high stereoscopic repulsion effect or the anionic surfactant (C) having the electrostatic repulsion effect and the stereoscopic repulsion effect is used concurrently with the anionic surfactant (A) having the high electrostatic repulsion effect, it becomes possible to lessen the diameter of the formed reaggregates of the fine carbon fibers, and thus it is possible to prepare an aqueous solution of a low viscosity. Therefore, it is possible to decrease the load on the preparation device and improve the workability. When preparation of an aqueous dispersion of fine carbon fibers having a high concentration of fine carbon fibers, that is in the range of not less than 4.0 % by weight, is intended, it is preferable to proceed in accordance with the above mentioned procedure 9) or 10). Namely, in the case of preparing the aqueous dispersion of fine carbon fibers having the high concentration, the aqueous solution in which the reaggregates are formed from the isolatedly disentangled fine carbon fibers shows even higher viscosity. Thus, by progressing the first dispersing step and the second dispersing step concurrently, in a solution in which the surfactants are mixed under the optimized kinds, the aqueous dispersion of fine carbon fibers having the high concentration can be readily prepared.

As for the articles produced by using the aqueous dispersion of fine carbon fibers according to the present invention, the present invention can be applied to all products which are manufactured by using water as a solvent, for instance, heating sources such as heaters used for electrical carpet, floor heating, wall heater, heater for road or roof snow melting system; electroconductive fibers in which the carbon fibers are coated on other fibers; electroconductive papers in accordance with paper making technique; electroconductive glass fiber non-woven fabrics in accordance with non-woven fabric making technique; electro-magnetic interference sealed materials and radio wave absorbing materials; electroconductive inks used for ink-jet, printing, and stationery, etc.; integrated circuits in accordance with patterning technique; and applied development for panel display; or the like.

In the case of manufacturing the heating source such as heater, a fine carbon fiber film which is obtained by drying the aqueous dispersion of fine carbon fibers is applied. If an aqueous dispersion of fine carbon fibers which is prepared by using a polycondensate type anionic surfactant solely is used for this production, the obtained fine carbon fiber film is not fit for the use of heating source, because it is hard and brittle and shows a high shrinkable property like a polystyrene resin, and which is followed by cracking of the fine carbon fiber film. If an aqueous dispersion of fine carbon fibers which is prepared by using solely a nonionic surfactant having ethylene oxide groups is used, the obtained fine carbon fiber film is not fit for the use of heating source, because the obtained film shows high adhesiveness and thus the fine carbon fibers are removed off from the film on contact, although the film forming property of the obtained fine carbon fiber film is good. In addition, if the adding amount of the nonionic surfactant becomes higher, a high electroconductivity necessitated for the heating part of the heater can be no longer acquired. On the other hand, since the aqueous dispersion of fine carbon fiber according to the present invention can bring the properties of the fine carbon fiber film, which is obtained by drying the dispersion, in control as the polycondensate type or polymerized type anionic surfactant is used in combination with the nonionic surfactant having ethylene oxide groups and/or the anionic surfactant having ethylene oxide groups, it is possible to provide a fine carbon fiber film which surmounts the above mentioned disadvantages and has a good film forming property.

In the case of manufacturing electroconductive fibers by using the aqueous dispersion of fine carbon fibers according to the present invention, it may be possible to form an electroconductive layer onto each fiber by coating the fibers with an aqueous solution which is prepared by adding a binder or the like to the aqueous dispersion of fine carbon fibers. On the manufacturing of the electroconductive fibers, if the adding amount of surfactants which are used for dispersing the fine carbon fibers is higher than the amount of the fine carbon fibers, there is a certain possibility that the electroconductivity of the obtained electroconductive fibers becomes unduly low and the properties as fiber are affected adversely. For instance, if an aqueous dispersion of fine carbon fibers which contains a relatively large amount of polycondensate type or polymerized type anionic surfactant is used for this production, the electroconductive layer of the obtained electroconductive fiber is hard and brittle, and which provides a low durability as is the case of the electroconductive fibers known in the art. If an aqueous dispersion of fine carbon fibers which is prepared by using solely a nonionic surfactant having ethylene oxide groups is used, there is a possibility that the reagglomeration of the fine carbon fibers is caused on the addition of the binder, since the fine carbon fibers have been dispersed only by the stereoscopic repulsion effect. On the other hand, since the aqueous dispersion of fine carbon fiber according to the present invention can bring the properties of the electroconductive layer parts of the electroconductive fibers, which are obtained by coating fibers with the dispersion, in control as the polycondensate type or polymerized type anionic surfactant is used in combination with the nonionic surfactant having ethylene oxide groups and/or the anionic surfactant having ethylene oxide groups, it is possible to provide electroconductive fibers which surmount the above mentioned disadvantages.

In the case of manufacturing electroconductive paper by using the aqueous dispersion of fine carbon fibers according to the present invention, it may be possible to form an electroconductive paper in a diluted solution which is prepared by adding the aqueous dispersion of fine carbon fibers into a large amount of water where pulp have been dispersed. On the manufacturing of the electroconductive paper, if an aqueous dispersion of fine carbon fibers which is prepared by using solely a polycondensate type or polymerized type anionic surfactant or a nonionic surfactant having ethylene oxide groups is used, there is a possibility that the reagglomeration of the fine carbon fibers is caused, since the dispersed state of the fine carbon fibers becomes instable on the preparation of the diluted solution. On the other hand, since the aqueous dispersion of fine carbon fiber according to the present invention can prepare the aqueous dispersion of fine carbon fibers which dispersion state does not change even when diluting the solution as the polycondensate type or polymerized type anionic surfactant is used in combination with the nonionic surfactant having ethylene oxide groups and/or the anionic surfactant having ethylene oxide groups, it is possible to provide an electroconductive paper throughout which the fine carbon fibers are contained. Further, this electroconductive paper can be used as an electro-magnetic interference sealed material and a radio wave absorbing material.

### [Examples]

Now, the present invention will be explained concretely by illustrating examples as follows. However, the present invention is not limited to these examples.

### <Examples 1 - 4>

### [Anionic surfactant (A) and nonionic surfactant (B)]

10 g of fine carbon fibers (MWNT-7 manufactured by Hodogaya Chemical Co., Ltd., fiber diameter: 40 - 90 nm, mean aggregate particle diameter: 52 µm, D/G ratio: 0.06 - 0.15) were added to 1000 g of deionized water to which an anionic surfactant (A) had been dissolved, and the resultant mixture underwent disentangling treatment with using a beads mill disperser (DYNO-MILL disperser, manufactured by Shinmaru Enterprises Corporation). A nonionic surfactant (B) was added to the aqueous solution in which the disentangled fine carbon fibers had formed reaggregates, and then the resultant mixture underwent further dispersing treatment with using the beads mill disperser. Thereby, an aqueous dispersion of fine carbon fibers where the fine carbon fibers were dispersed in the solution was obtained. The structural formulae of the used anionic surfactants (A) and the used nonionic surfactants (B) are shown in Table 1 and Table 2, and the kinds and the adding amounts of these surfactants are shown in Table 4.

### <Example 5>

20 g of fine carbon fibers (MWNT-7 manufactured by Hodogaya Chemical Co., Ltd., fiber diameter: 40 - 90 nm, mean aggregate particle diameter: 52 µm, D/G ratio: 0.06 - 0.15) were added to 1000 g of deionized water to which an anionic surfactant (A) and a nonionic surfactant (B) had been dissolved, and the resultant mixture underwent disentangling treatment with using the beads mill disperser. Further, while the viscosity was measured, a dose of 10 g of the fine carbon fibers was boosted twice and the disentangling treatment was further performed. Thereby, an aqueous dispersion of fine carbon fibers where the fine carbon fibers were dispersed in the solution was obtained. The structural formulae of the used anionic surfactant (A) and the used nonionic surfactant (B) are shown in Table 1 and Table 2, and the kinds and the adding amounts of these surfactants are shown in Table 4.

**[Table 1]**

| Anionic surfactant (A) | |
|---|---|
| FT-500 | 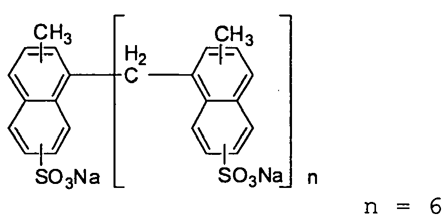 |
| Alscope TH-330 | **C₁₂H₂₅O(C₂H₄O)₃SO₃Na** |
| DEMOL NL | 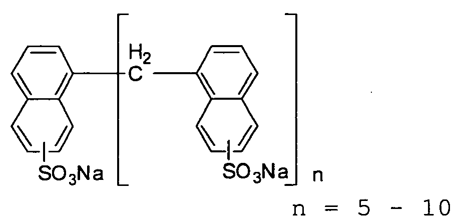 |

**[Table 2]**

| Nonionic surfactant (B) | |
|---|---|
| SORPOL T-15 | 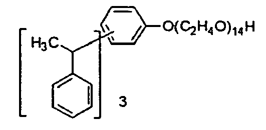 |
| SORPOL T-18D | 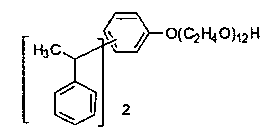 |
| EMULGEN A-60 | 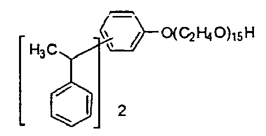 |
| SORPOL F-19 | 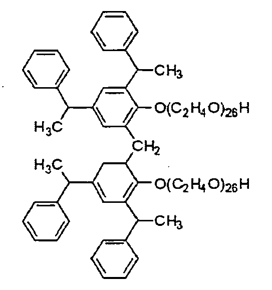 |
| SORPOL F-27 | 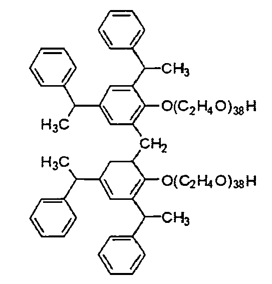 |
| PEGNOL O-20 | **C₁₈H₃₇O(C₂H₄O)₂₀H** |

### <Example 6>

### [Anionic surfactant (A) and anionic surfactant (C)]

10 g of fine carbon fibers (MWNT-7 manufactured by Hodogaya Chemical Co., Ltd., fiber diameter: 40 - 90 nm, mean aggregate particle diameter: 52 µm, D/G ratio: 0.06 - 0.15) were added to 1000 g of deionized water to which an anionic surfactant (A) had been dissolved, and the resultant mixture underwent disentangling treatment with using a beads mill disperser (DYNO-MILL disperser, manufactured by Shinmaru Enterprises Corporation). An anionic surfactant (C) was added to the aqueous solution in which the disentangled fine carbon fibers formed reaggregates, and then the resultant mixture underwent further dispersing treatment with using the beads mill disperser. Thereby, an aqueous dispersion of fine carbon fibers where the fine carbon fibers were dispersed in the solution was obtained. The structural formulae of the used anionic surfactant (A) and the used anionic surfactant (C) are shown in Table 1 and Table 3, and the kinds and the adding amounts of these surfactants are shown in Table 4.

### <Examples 7 - 11>

20 g of fine carbon fibers (MWNT-7 manufactured by Hodogaya Chemical Co., Ltd., fiber diameter: 40 - 90 nm, mean aggregate particle diameter: 52 µm, D/G ratio: 0.06 - 0.15) were added to 1000 g of deionized water to which an anionic surfactant (A) and an anionic surfactant (C) had been dissolved, and the resultant mixture underwent disentangling treatment with using the beads mill disperser. Further, while the viscosity was measured, a dose of 10 g of the fine carbon fibers was boosted twice or thrice and the disentangling treatment was further performed. Thereby, an aqueous dispersion of fine carbon fibers where the fine carbon fibers were dispersed in the solution was obtained. The structural formulae of the used anionic surfactants (A) and the used anionic surfactants (C) are shown in Table 1 and Table 3, and the kinds and the adding amounts of these surfactants are shown in Table 4.

### <Examples 12 - 19>

### [Anionic surfactant (A), nonionic surfactant (B)and anionic surfactant (C)]

10 g of fine carbon fibers (MWNT-7 manufactured by Hodogaya Chemical Co., Ltd., fiber diameter: 40 - 90 nm, mean aggregate particle diameter: 52 µm, D/G ratio: 0.06 - 0.15) were added to 1000 g of deionized water to which an anionic surfactant (A) had been dissolved, and the resultant mixture underwent disentangling treatment with using the beads mill disperser. A nonionic surfactant (B) and an anionic surfactant (C) were added to the aqueous solution in which the disentangled fine carbon fibers had formed reaggregates, and then the resultant mixture underwent further dispersing treatment with using the beads mill disperser. Thereby, an aqueous dispersion of fine carbon fibers where the fine carbon fibers were dispersed in the solution was obtained. The structural formulae of the used anionic surfactants (A), the used nonionic surfactants (B) and the used anionic surfactant (C) are shown in Tables 1 -3, and the kinds and the adding amounts of these surfactants are shown in Table 4.

**[Table 3]**

| Anionic surfactant (C) | |
|---|---|
| SORPOL T-10SPG | 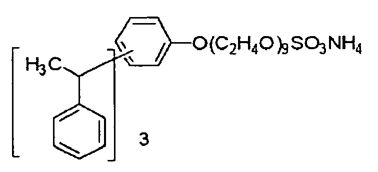 |
| SORPOL 7948 | 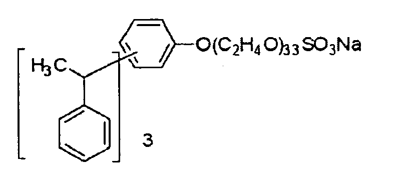 |

### <Controls 1 - 4>

The preparation was performed in accordance with the procedure of Example 1 except that the beads mill dispersing treatment was done with the kinds and adding amounts of surfactants shown in Table 4.

**[Table 4]**

| Example | Adding amount of carbon fibers (g) | (A) | | (B) | | (C) | | Mean particle diameter (d₅₀) (nm) | Film |
|---|---|---|---|---|---|---|---|---|---|
| | | Anionic surfactant | Adding amount (g) | Nonionic surfactant | Adding amount (g) | Anionic surfactant | Adding amount (g) | | |
| 1 | 10 | FT-500 | 2 | SORPOL T-15 | 4 | - | - | 209 | ○ |
| 2 | 10 | FT-500 | 2 | SORPOL T-18D | 4 | - | - | 193 | ○ |
| 3 | 10 | FT-500 | 2 | EMAL A-60 | 4 | - | - | 205 | ○ |
| 4 | 10 | FT-500 | 2 | SORPOL F-27 | 4 | - | - | 170 | ○ |
| 5 | 40 | FT-500 | 3 | SORPOL T-18D | 16 | - | - | 254 | ○ |
| 6 | 10 | FT-500 | 2 | - | - | SORPOL 10-SPG | 4 | 264 | ○ |
| 7 | 50 | FT-500 | 10 | - | - | SORPOL 10-SPG | 20 | 180 | ○ |
| 8 | 50 | TH-330 | 5 | - | - | SORPOL 10-SPG | 20 | 176 | ○ |
| 9 | 40 | TH-330 | 4 | - | - | SORPOL 10-SPG | 16 | 172 | ○ |
| 10 | 40 | TH-330 | 3 | - | - | SORPOL 10-SPG | 12 | 163 | ○ |
| 11 | 40 | TH-330 | 4 | - | - | SORPOL 10-SPG | 8 | 175 | |
| 12 | 10 | FT-500 | 2 | PEGNOL O-20 | 2 | SORPOL 10-SPG | 2 | 197 | ○ |
| 13 | 10 | Alscope TH-330 | 2 | PEGNOL O-20 | 2 | SORPOL 10-SPG | 2 | 165 | ○ |
| 14 | 10 | DEMOLNL | 2 | PEGNOL O-20 | 2 | SORPOL 10-SPG | 2 | 190 | ○ |
| 15 | 10 | FT-500 | 2 | SORPOL F-27 | 2 | SORPOL 10-SPG | 2 | 162 | ○ |
| 16 | 10 | Alscope TH-330 | 2 | SORPOL F-27 | 2 | SORPOL 10-SPG | 2 | 169 | ○ |
| 17 | 10 | DEMOLNL | 2 | SORPOL T-15 | 2 | SORPOL 10-SPG | 2 | 176 | ○ |
| 18 | 10 | FT-500 | 2 | SORPOL F-27 | 2 | SORPOL 7948 | 2 | 157 | ○ |
| 19 | 10 | FT-500 | 2 | SORPOL T-15 | 2 | SORPOL 10-SPG | 2 | 203 | ○ |
| Control | | | | | | | | | |
| 1 | 10 | FT-500 | 2 | - | - | - | - | 25300 | × |
| 2 | 10 | Alscope TH-330 | 2 | - | - | - | - | 39500 | × |
| 3 | 10 | DEMOLNL | 2 | - | - | - | - | 6790 | × |
| 4 | 10 | A-60 | 2 | - | - | - | - | 3760 | ○ |

### <Examples 20 - 24>

### [Kinds of fine carbon fibers]

Aqueous dispersions of fine carbon fiber were prepared with using each 10 g of different types of fine carbon fibers which have mutually different fiber diameters as shown in Table 5. The structural formulae of the used anionic surfactants (A), the used nonionic surfactants (B) and the used anionic surfactant (C) are shown in Tables 1 -3, and the kinds and the adding amounts of these surfactants are shown in Table 5. Other conditions were in accordance with Examples 12 - 19. The physical properties of fine carbon fibers used in Example 20 - 24, were as follows: Example 20(fiber diameter: 5 - 25 nm, D/G ratio: 1.32, mean fine carbon fibers' aggregate particle diameter: 0.1 -1 mm); Example 21(fiber diameter: 20 - 40 nm, D/G ratio: 0.116); Example 22 (fiber diameter: 20 - 60 nm, D/G ratio: 0.09-0.12); Example 23(fiber diameter: 70 - 150 nm, D/G ratio: 0.06 - 0.15, mean fine carbon fibers' aggregate particle diameter: 39 µm) ; and Example 24 (fiber diameter: 80 - 180 nm, D/G ratio: 0.07 - 0.01, mean fine carbon fibers' aggregate particle diameter: 47 µm).

**[Table 5]**

| Example | Fiber diameter fine carbon fibers (nm) | (A) | | (B) | | (C) | | Mean particle diameter(d₅₀) (nm) | Film formability |
|---|---|---|---|---|---|---|---|---|---|
| | | Anionic of surfactant | Adding amount (g) | Nonionic surfactant | Adding amount (g) | Anionic surfactant | Adding amount (g) | | |
| 20 | 5-25 | FT-500 | 3 | PEGNOL O-20 | 3 | SORPOL 10-SPG | 3 | 100 | ○ |
| 21 | 20-40 | FT-500 | 3 | PEGNOL O-20 | 3 | SORPOL 10-SPG | 3 | 199 | ○ |
| 22 | 20-60 | FT-500 | 2 | PEGNOL O-20 | 2 | SORPOL 10-SPG | 2 | 175 | ○ |
| 23 | 70-150 | FT-500 | 2 | PEGNOL O-20 | 2 | SORPOL 10-SPG | 2 | 325 | ○ |
| 24 | 80-180 | FT-500 | 2 | PEGNOL O-20 | 2 | SORPOL 10-SPG | 2 | 245 | ○ |

### [Concentration of fine carbon fibers in aqueous dispersion of fine carbon fibers and preparing method thereof]

### <Example 25>

20 g of fine carbon fibers (MWNT-7 manufactured by Hodogaya Chemical Co., Ltd., mean diameter: 60 nm, mean aggregate particle diameter: 60 µm) were added to 1000 g of deionized water to which an anionic surfactant (A) had been dissolved, and the resultant mixture underwent disentangling treatment with using the beads mill disperser. A nonionic surfactant (B) and an anionic surfactant (C) were added to the aqueous solution in which the disentangled fine carbon fibers had formed reaggregates, and then the resultant mixture underwent further dispersing treatment with using the beads mill disperser. Thereby, an aqueous dispersion of fine carbon fibers where the fine carbon fibers were dispersed in the solution was obtained. The structural formulae of the used anionic surfactant (A), the used nonionic surfactant (B) and the used anionic surfactant (C) are shown in Tables 1 -3, and the kinds and the adding amounts of these surfactants are shown in Table 6.

### <Example 26>

20 g of fine carbon fibers (MWNT-7 manufactured by Hodogaya Chemical Co., Ltd., mean diameter: 60 nm, mean aggregate particle diameter: 60 µm) were added to 1000 g of deionized water to which an anionic surfactant (A) and a nonionic surfactant (B) had been dissolved, and the resultant mixture underwent disentangling treatment with using the beads mill disperser. Further, while the viscosity was measured, 10 g of the fine carbon fibers were boosted, and the disentangling treatment was further performed. An anionic surfactant (C) was added to the aqueous solution in which the disentangled fine carbon fibers had formed reaggregates, and then the resultant mixture underwent further dispersing treatment with using the beads mill disperser. Thereby, an aqueous dispersion of fine carbon fibers where the fine carbon fibers were dispersed in the solution was obtained. The structural formulae of the used anionic surfactant (A), the used nonionic surfactant (B) and the used anionic surfactant (C) are shown in Tables 1 -3, and the kinds and the adding amounts of these surfactants are shown in Table 6.

### <Example 27>

20 g of fine carbon fibers (MWNT-7 manufactured by Hodogaya Chemical Co., Ltd., mean diameter: 60 nm, mean aggregate particle diameter: 60 µm) were added to 1000 g of deionized water to which an anionic surfactant (A) and an anionic surfactant (C) had been dissolved, and the resultant mixture underwent disentangling treatment with using the beads mill disperser. Further, while the viscosity was measured, a dose of 10 g of the fine carbon fibers was boosted twice, and the disentangling treatment was further performed. A nonionic surfactant (B) was added to the aqueous solution in which the disentangled fine carbon fibers had formed reaggregates, and then the resultant mixture underwent further dispersing treatment with using the beads mill disperser. Thereby, an aqueous dispersion of fine carbon fibers where the fine carbon fibers were dispersed in the solution was obtained. The structural formulae of the used anionic surfactant (A), the used nonionic surfactant (B) and the used anionic surfactant (C) are shown in Tables 1 -3, and the kinds and the adding amounts of these surfactants are shown in Table 6.

### <Example 28>

20 g of fine carbon fibers (MWNT-7 manufactured by Hodogaya Chemical Co., Ltd., mean diameter: 60 nm, mean aggregate particle diameter: 60 µm) were added to 1000 g of deionized water to which an anionic surfactant (A) and a nonionic surfactant (B) had been dissolved, and the resultant mixture underwent disentangling treatment with using the beads mill disperser. Further, while the viscosity was measured, a dose of 10 g of the fine carbon fibers was boosted thrice, and the disentangling treatment was further performed. An anionic surfactant (C) was added to the aqueous solution in which the disentangled fine carbon fibers had formed reaggregates, and then the resultant mixture underwent further dispersing treatment with using the beads mill disperser. Thereby, an aqueous dispersion of fine carbon fibers where the fine carbon fibers were dispersed in the solution was obtained. The structural formulae of the used anionic surfactant (A), the used nonionic surfactant (B) and the used anionic surfactant (C) are shown in Tables 1 -3, and the kinds and the adding amounts of these surfactants are shown in Table 6.

### <Example 29>

20 g of fine carbon fibers (MWNT-7 manufactured by Hodogaya Chemical Co., Ltd., mean diameter: 60 nm, mean aggregate particle diameter: 60 µm) were added to 1000 g of deionized water to which an anionic surfactant (A), a nonionic surfactant (B) and an anionic surfactant (C) had been dissolved, and the resultant mixture underwent disentangling treatment with using the beads mill disperser. Further, while the viscosity was measured, a dose of 10 g of the fine carbon fibers was boosted eight times, and the disentangling and dispersing treatment was carried out. Thereby, an aqueous dispersion of fine carbon fibers where the fine carbon fibers were dispersed in the solution was obtained. The structural formulae of the used anionic surfactant (A), the used nonionic surfactant (B) and the used anionic surfactant (C) are shown in Tables 1 -3, and the kinds and the adding amounts of these surfactants are shown in Table 6.

**[Table 6]**

| Example | Adding amount fine carbon fibers (g) | (A) | | (B) | | (C) | | Mean Particles diameter (d₅₀) (nm) | Film formability |
|---|---|---|---|---|---|---|---|---|---|
| | | Anionic surfactant | Adding amount (g) | Nonionic surfactant | Adding amount (g) | Anionic surfactant | Adding amount (g) | | |
| 25 | 20 | FT-500 | 4 | PEGNOL O-20 | 4 | SORPOL 10-SPG | 4 | 200 | ○ |
| 26 | 30 | FT-500 | 6 | PEGNOL O-20 | 6 | SORPOL 10-SPG | 6 | 170 | ○ |
| 27 | 40 | FT-500 | 8 | SORPOL F-27 | 8 | SORFOL 10-SPG | 8 | 172 | ○ |
| 28 | 50 | FT-500 | 10 | SORPOL F-27 | 10 | SORPOL 10-SPG | 10 | 163 | ○ |
| 29 | 100 | FT-500 | 20 | SORPOL F-27 | 20 | SORPOL 10-SPG | 20 | 163 | ○ |

### [Anionic surfactant (A), two or more kinds of nonionic surfactants (B)and/or two or more kinds of anionic surfactants (C)]

### <Example 30>

10 g of fine carbon fibers (MWNT-7 manufactured by Hodogaya Chemical Co., Ltd., mean diameter: 60 nm, mean aggregate particle diameter: 60 µm) were added to 1000 g of deionized water to which an anionic surfactant (A) had been dissolved, and the resultant mixture underwent disentangling treatment. Two kinds of nonionic surfactant (B) were added to the aqueous solution in which the disentangled fine carbon fibers had formed reaggregates, and then the resultant mixture underwent further dispersing treatment with using the beads mill disperser. Thereby, an aqueous dispersion of fine carbon fibers where the fine carbon fibers were dispersed in the solution was obtained. The structural formulae of the used anionic surfactant (A) and the used nonionic surfactants (B) are shown in Table 1 and Table 2, and the kinds and the adding amounts of these surfactants are shown in Table 7.

### <Example 31>

10 g of fine carbon fibers (MWNT-7 manufactured by Hodogaya Chemical Co., Ltd., mean diameter: 60 nm, mean aggregate particle diameter: 60 µm) were added to 1000 g of deionized water to which an anionic surfactant (A) had been dissolved, and the resultant mixture underwent disentangling treatment. Two kinds of anionic surfactant (C) were added to the aqueous solution in which the disentangled fine carbon fibers had formed reaggregates, and then the resultant mixture underwent further dispersing treatment with using the beads mill disperser. Thereby, an aqueous dispersion of fine carbon fibers where the fine carbon fibers were dispersed in the solution was obtained. The structural formulae of the used anionic surfactant (A) and the used anionic surfactants (C) are shown in Table 1 and Table 3, and the kinds and the adding amounts of these surfactants are shown in Table 7.

### <Example 32>

20 g of fine carbon fibers (MWNT-7 manufactured by Hodogaya Chemical Co., Ltd., mean diameter: 60 nm, mean aggregate particle diameter: 60 µm) were added to 1000 g of deionized water to which an anionic surfactant (A) and two kinds of nonionic surfactants (B) had been dissolved, and the resultant mixture underwent disentangling treatment with using the beads mill disperser. An anionic surfactant (C) was added to the aqueous solution in which the disentangled fine carbon fibers had formed reaggregates, and then the resultant mixture underwent further dispersing treatment with using the beads mill disperser. Thereby, an aqueous dispersion of fine carbon fibers where the fine carbon fibers were dispersed in the solution was obtained. The structural formulae of the used anionic surfactant (A), the used nonionic surfactants (B) and the used anionic surfactant (C) are shown in Tables 1 - 3, and the kinds and the adding amounts of these surfactants are shown in Table 7.

### <Example 33>

20 g of fine carbon fibers (MWNT-7 manufactured by Hodogaya Chemical Co., Ltd., mean diameter: 60 nm, mean aggregate particle diameter: 60 µm) were added to 1000 g of deionized water to which an anionic surfactant (A) and two kinds of anionic surfactants (C) as shown in Table 7 had been dissolved, and the resultant mixture underwent disentangling treatment with using the beads mill disperser. A nonionic surfactant (B) was added to the aqueous solution in which the disentangled fine carbon fibers had formed reaggregates, and then the resultant mixture underwent further dispersing treatment with using the beads mill disperser. Thereby, an aqueous dispersion of fine carbon fibers where the fine carbon fibers were dispersed in the solution was obtained. The structural formulae of the used anionic surfactant (A), the used nonionic surfactant (B) and the used anionic surfactants (C) are shown in Tables 1 - 3, and the kinds and the adding amounts of these surfactants are shown in Table 7.

### <Example 34>

20 g of fine carbon fibers (MWNT-7 manufactured by Hodogaya Chemical Co., Ltd., mean diameter: 60 nm, mean aggregate particle diameter: 60 µm) were added to 1000 g of deionized water to which an anionic surfactant (A) and two kinds of nonionic surfactants (B) as shown in Table 7 had been dissolved, and the resultant mixture underwent disentangling treatment with using the beads mill disperser. Further, while the viscosity was measured, 10 g of the fine carbon fibers were boosted, and the disentangling and dispersing treatment was further carried out. Thereby, an aqueous dispersion of fine carbon fibers where the fine carbon fibers were dispersed in the solution was obtained. The structural formulae of the used anionic surfactant (A) and the used nonionic surfactants (B) are shown in Table 1 and Table 2, and the kinds and the adding amounts of these surfactants are shown in Table 7.

### <Example 35>

20 g of fine carbon fibers (MWNT-7 manufactured by Hodogaya Chemical Co., Ltd., mean diameter: 60 nm, mean aggregate particle diameter: 60 µm) were added to 1000 g of deionized water to which an anionic surfactant (A) and two kinds of anionic surfactants (C) as shown in Table 7 had been dissolved, and the resultant mixture underwent disentangling treatment with using the beads mill disperser. Further, while the viscosity was measured, 10 g of the fine carbon fibers were boosted, and the disentangling and dispersing treatment was further carried out. Thereby, an aqueous dispersion of fine carbon fibers where the fine carbon fibers were dispersed in the solution was obtained. The structural formulae of the used anionic surfactant (A) and the used nonionic surfactants (B) are shown in Table 1 and Table 3, and the kinds and the adding amounts of these surfactants are shown in Table 7.

**[Table 7]**

| Example | Adding amount of fine carbon fibers (g) | (A) | | (B) | | (C) | | Moan particle diameter(d50) (nm) | Film formability |
|---|---|---|---|---|---|---|---|---|---|
| | | Anionic surfactant | Adding amount (g) | Nonionic surfactant | Adding amount (g) | Anionic surfactant | Adding amount (g) | | |
| 30 | 10 | TH-330 | 1 | PEGNOL O-20 | 2 | - | - | 280 | ○ |
| | | | | SORPOL F-27 | 2 | | | | |
| 31 | 10 | FT-500 | 2 | - | - | SORPOL 10-SPG | 2 | 195 | ○ |
| | | | | | | SORPOL 7948 | 2 | | |
| 32 | 20 | FT-500 | 4 | PEGNOL O-20 | 2 | SORPOL 10-SPG | 4 | 238 | ○ |
| | | | | SORPOL F-27 | 2 | | | | |
| 33 | 20 | TH-330 | 2 | SORPOL F-27 | 4 | SORPOL 10-SPG | 2 | 192 | ○ |
| | | | | | | SORPOL 7948 | 2 | | |
| 34 | 30 | FT-500 | 6 | PEGNOL O-20 | 6 | - | - | 204 | ○ |
| | | | | SORPOL F-27 | 6 | | | | |
| 35 | 30 | TH-330 | 3 | - | - | SORPOL 10-SPG | 3 | 279 | ○ |
| | | | | | | SORPOL 7948 | 3 | | |

### [Measurement of mean diameter of fine carbon fibers in the aqueous dispersion of fine carbon fibers]

Regarding the mean diameter of fine carbon fibers in the aqueous dispersion of fine carbon fibers in Examples 1∼35 and Controls 1∼4, the mean diameter (d₅₀) was calculated on the basis of measurements using MICROTRAC MP-3000, manufactured by NIKKISO CO. , LTD. The obtained results are shown in Table 4, Table 5, Table 6 and Table 7, individually.

### [Observation of dispersive state of fine carbon fibers in the aqueous dispersion of fine carbon fibers]

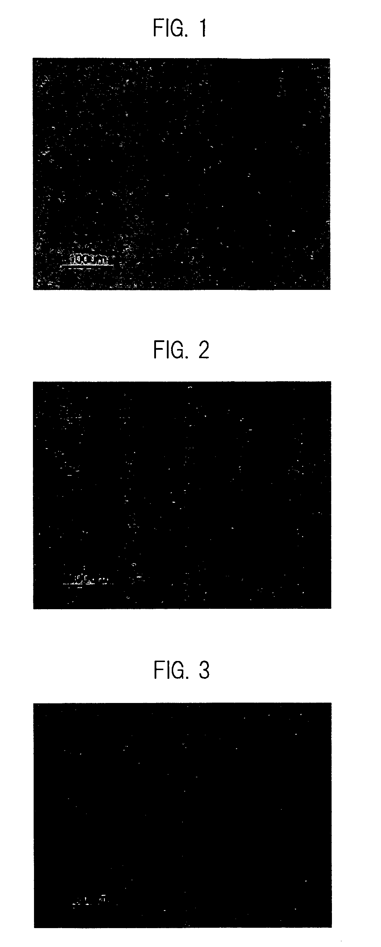

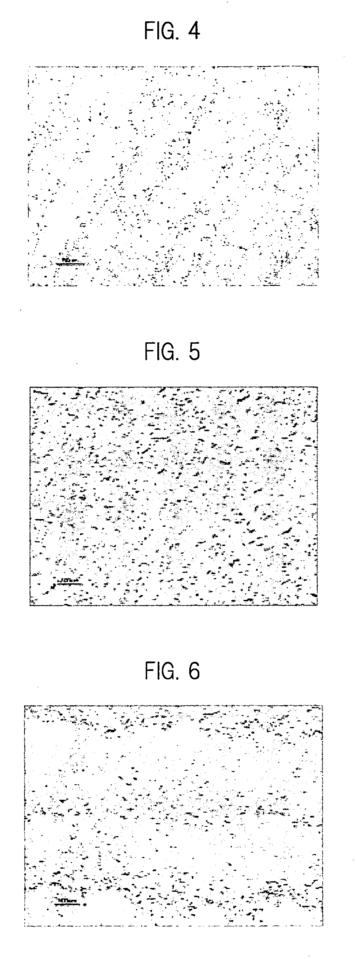

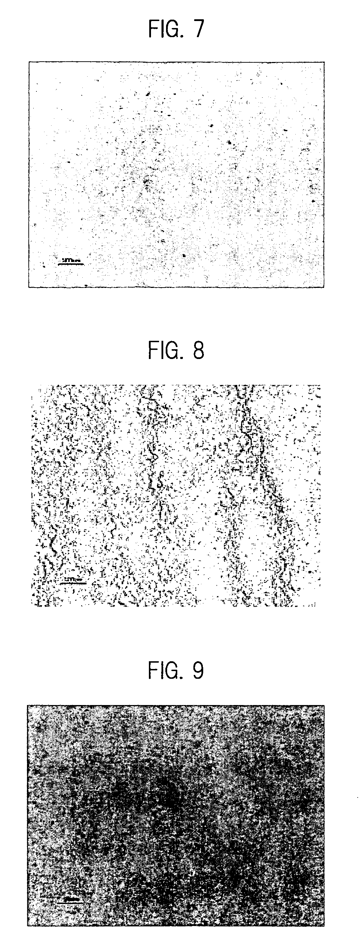

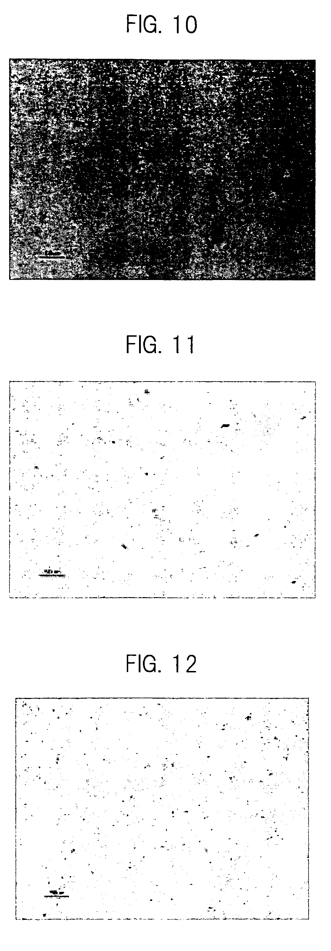

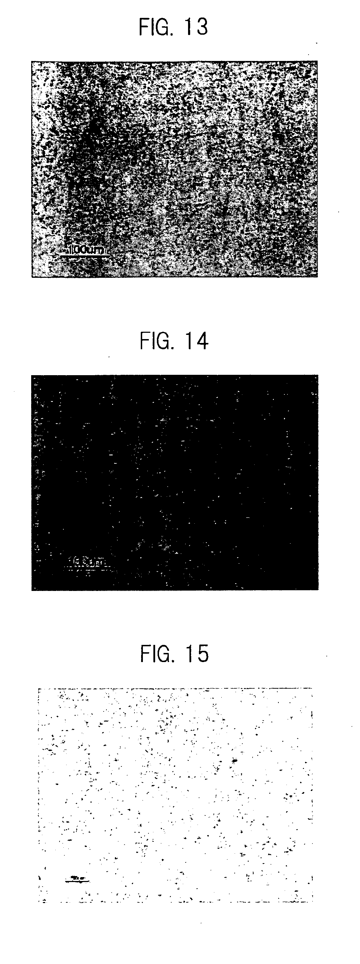

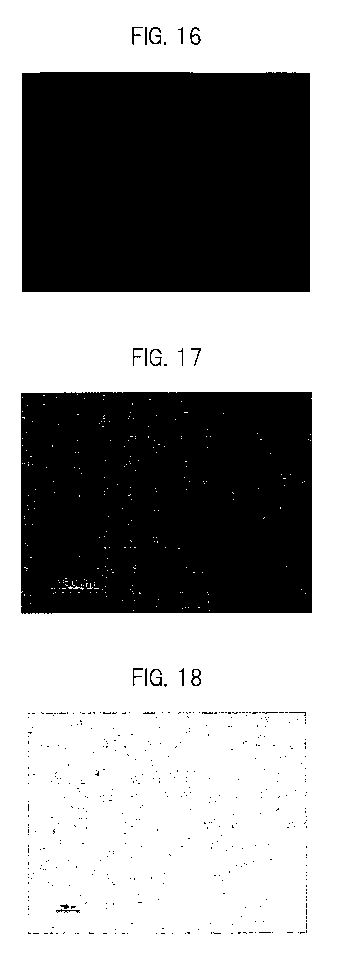

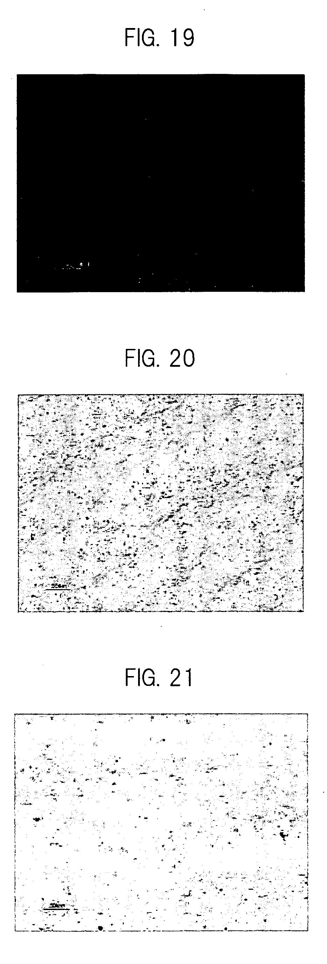

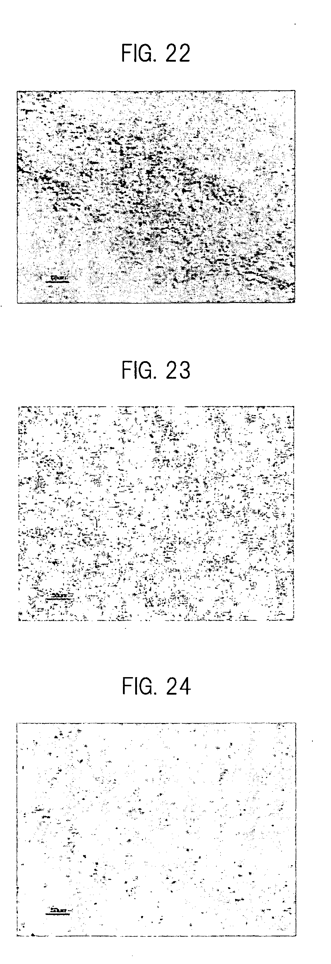

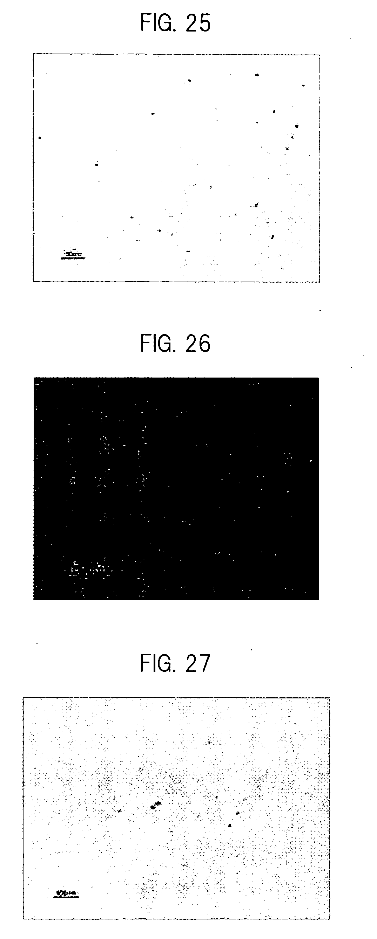

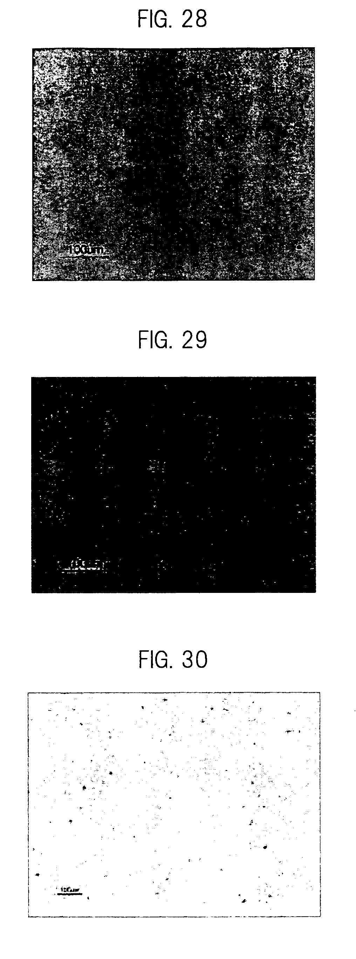

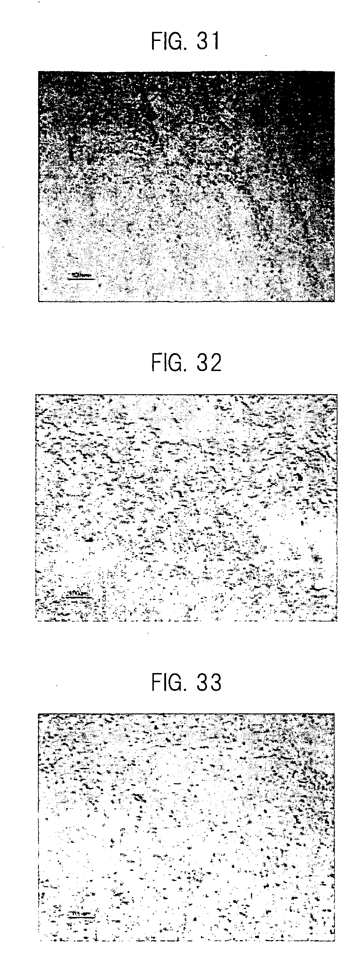

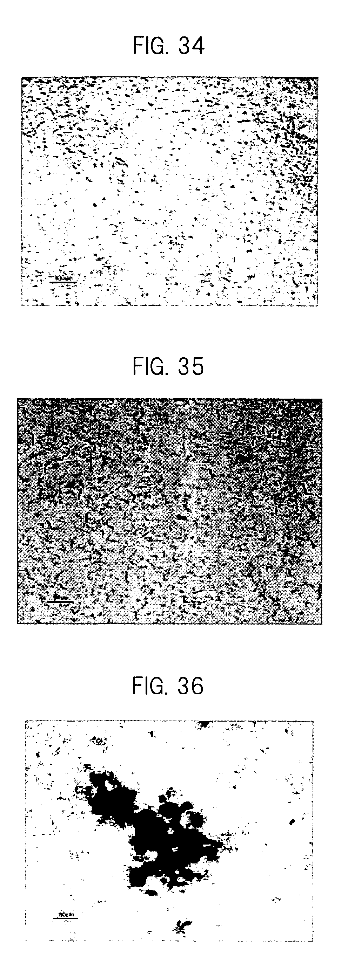

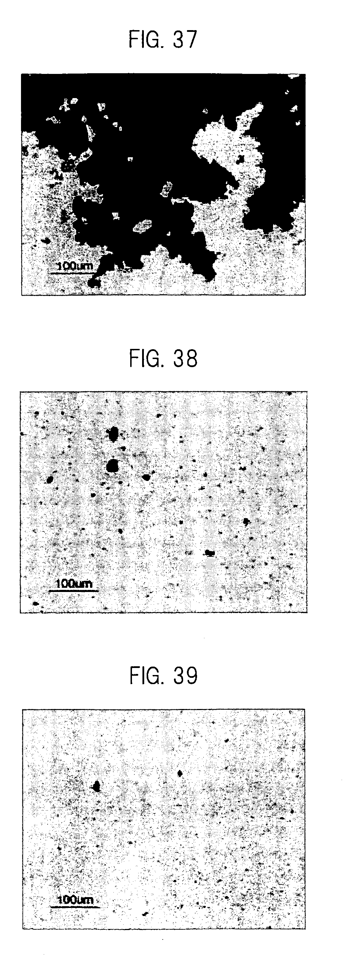

Each 0.5 g of the aqueous dispersions of fine carbon fibers in Examples 1 - 35 and Control 1-4 was diluted with 20 g of deionized water while agitating. After that, the observation of dispersive state of fine carbon fibers was carried out by using an optical microscope. The obtained results of observed dispersive state are shown in Figs. 1 - 39, wherein Figs. 1 - 35 are optical microscopic photographs which show each individual observed dispersive state of Example 1 - 35 in order, and Figs. 36 - 39 are optical microscopic photographs which show similarly each individual observed dispersive state of Controls 1 - 4 in order.

### [Preservation stability test of the aqueous dispersion of fine carbon fibers]

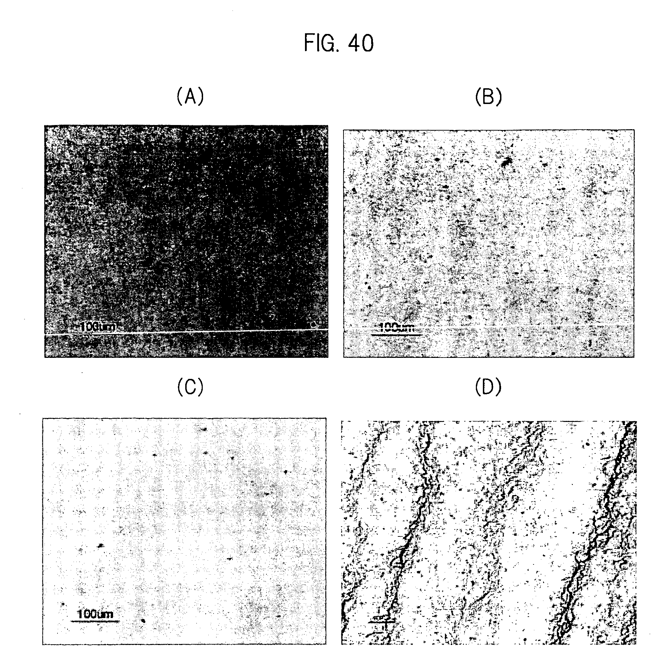

The aqueous dispersion of fine carbon fibers prepared in Example 28 was used. 1 month, 3 months and 6 months after preparation, this aqueous dispersion of fine carbon fibers was agitated by using a Three-One Motor for one hour, and then the observation of dispersive state of fine carbon fibers was carried out in accordance with the above mentioned procedure for the observation of dispersive state of fine carbon fibers in the aqueous dispersion of fine carbon fibers. The obtained results are shown in Fig. 40 (A) - (D), wherein Fig. 40 (A), Fig. 40 (B), Fig. 40 (C) and Fig. 40 (D) show the dispersive state of just after preparation, the dispersive state of 1 month after preparation, the dispersive state of 3 months after preparation, and the dispersive state of 6 months after preparation, respectively.

### [Film formability test of the fine carbon fiber film after drying the aqueous dispersion of fine carbon fibers]

Each 15 g of aqueous dispersions of fine carbon fibers obtained in Examples 1 - 17 and Controls 1 - 4 was added in a petri dish (5 cm in diameter), and then the petri dish was placed in an oven of 60 °C and left therein for 5 hours. After that, the filming state of the fine carbon fiber film was observed. The evaluation was made in accordance with the following criteria: the case that fine carbon fiber film was formed throughout bottom of petri dish was assessed as "○", and the case that fine carbon fiber film was not obtained or the case that the film was broken in a state of being rolled state although the film was formed was assessed as "X". The obtained results are shown Tables 4, 5, 6, and 7.

It is clear from Examples 1 - 5, 30, 34 and Controls 1 - 4 that the aqueous solution to which fine carbon fibers were dispersed, by using a combination of anionic surfactant (A) and nonionic surfactant (B), and in accordance with the method of the present invention shows a good dispersive state of the fine carbon fibers.

It is clear from Examples 6 - 11, 31, 35 and Controls 1 - 4 that the aqueous solution to which fine carbon fibers were dispersed by using a combination of anionic surfactant (A) and anionic surfactant (C), and in accordance with the method of the present invention shows a good dispersive state of the fine carbon fibers.

It is clear from Examples 12 -29, 32, 33 and Controls 1 - 4 that the aqueous solution to which fine carbon fibers were dispersed, by using a combination of anionic surfactant (A), nonionic surfactant (B) and anionic surfactant (C), and in accordance with the method of the present invention shows a good dispersive state of the fine carbon fibers.

It is clear from Examples 20 - 24 that fine carbon fibers of various fiber diameters can be dispersed in water by using a combination of anionic surfactant (A), nonionic surfactant (B) and anionic surfactant (C), and in accordance with the method of the present invention.

It is clear from Examples 25 - 29 that the aqueous dispersion of fine carbon fibers can be prepared with a high concentration of fine carbon fibers by using a combination of anionic surfactant (A), nonionic surfactant (B) and anionic surfactant (C), and in accordance with the method of the present invention.

It is clear from Examples 1 - 35 and Controls 1 -4 that the aggregate particles of fine carbon fibers in the aqueous dispersion of fine carbon fiber according to the present invention were not more than 350 nm, and It is clear from Examples 1 - 17 that a good fine carbon fiber film can be obtained by drying the aqueous dispersion of fine carbon fiber according to the present invention.

It is clear from Example 28 that the aqueous dispersion of fine carbon fiber which was prepared in accordance with the present invention can maintain the dispersive state stably for a long time.

### [Industrial Utility]

Since the aqueous dispersion of fine carbon fibers and the method for preparing thereof according to the present invention can provide aqueous dispersion of fine carbon fibers with a various concentration ranging from low concentration to high concentration, the aqueous dispersion of fine carbon fibers can be applied to various applied products as the demanded electrical characteristics. Thus, the aqueous dispersion of fine carbon fibers can be applied to all products which are manufactured by using water as a solvent, for instance, heating sources such as heaters used for electrical carpet, floor heating, wall heater, heater for road or roof snow melting system; electroconductive fibers in which the carbon fibers are coated on other fibers; electroconductive papers in accordance with paper making technique; electroconductive glass fiber non-woven fabrics in accordance with non-woven fabric making technique; electro-magnetic interference sealed materials and radio wave absorbing materials; electroconductive inks used for ink-jet, printing, and stationery, etc.; integrated circuits in accordance with patterning technique; and applied development for panel display; or the like.

## Claims

1. An aqueous dispersion of fine carbon fibers, which is **characterized in that** fine carbon fibers are dispersed in an aqueous solution which contains an anionic surfactant (A) and a nonionic surfactant (B).

2. An aqueous dispersion of fine carbon fibers, which is **characterized in that** fine carbon fibers are dispersed in an aqueous solution which contains an anionic surfactant (A) and an anionic surfactant (C) which has a higher steric hindrance structure than the structure of the anionic surfactant (A).

3. An aqueous dispersion of fine carbon fibers which is **characterized in that** fine carbon fibers are dispersed in an aqueous solution which contains an anionic surfactant (A); a nonionic surfactant (B); and an anionic surfactant (C) which has a higher steric hindrance structure than the structure of the anionic surfactant (A).

4. The aqueous dispersion of fine carbon fibers according to one of Claims 1 - 3, wherein the concentration of the fine carbon fibers is in the range of 0.01 - 20 % by weight.

5. The aqueous dispersion of fine carbon fibers according to one of Claims 1 - 3, wherein the fine carbon fibers are dispersed to the extent that the mean particle diameter (d₅₀) of fine carbon fibers is not more than 350 nm.

6. The aqueous dispersion of fine carbon fibers according to one of Claims 1 - 3, wherein the anionic surfactant (A) is an anionic surfactant having no benzyl skeleton.

7. The aqueous dispersion of fine carbon fibers according to one of Claims 1 - 3, wherein the anionic surfactant (A) is at least one anionic surfactant having no benzyl skeleton selected from the group consisting of alkyl ester sulfates and derivatives thereof, polyoxyethylene alkyl ether sulfates and derivatives thereof, sulfosuccinates and derivatives thereof, amide ether sulfates and derivatives thereof, taurine derivatives, sarcosine derivatives, aryl sulfonates and derivatives thereof, reactive surfactants, fatty acid salts, polyoxyethylene alkyl ether phosphates, alkenyl succinates and derivatives thereof, naphthyl sulfonates and derivatives thereof, formal condensates of naphthalene sulfonates and derivatives thereof, polystyrene sulfonates and derivatives thereof, polycarboxylates and derivatives thereof.

8. The aqueous dispersion of fine carbon fibers according to one of Claims 1 - 7, wherein the anionic surfactant (A) comprises at least one of polyoxyethylene alkyl ether sulfates or derivatives thereof.

9. The aqueous dispersion of fine carbon fibers according to one of Claims 1 - 8, wherein the anionic surfactant (A) comprises at least one of polycondensate type aninonic surfactants.

10. The aqueous dispersion of fine carbon fibers according to one of Claims 1 - 8,wherein the anionic surfactant (A) is a formal condensate of naphthalene sulfonates or a derivative thereof.

11. The aqueous dispersion of fine carbon fibers according to one of Claims 1 - 10, wherein the nonionic surfactant (B) is at least one member selected from the group consisting of polyoxyethylene alkyl ethers and derivatives thereof, polyoxyethylene styrenated phenyl ethers and derivatives thereof, formal condensates of polyoxyethylene styrenated phenyl ethers and derivatives thereof, polyoxyalkylene derivatives, alkylol amide type, polyethylene glycol fatty acid esters, glycerin esters, P.O.E. glycerin esters, P.O.E. glycerin esters, sorbitan fatty acid esters, polyoxyethylene sorbitan fatty acid esters, reactive surfactants, sorbitan fatty acid esters, polyoxyethylene sorbitan fatty acid esters, polyoxyethylene sorbitol fatty acid esters, glycerin fatty acid esters, polyoxyethylene fatty acid esters, polyoxyethylene hydrogenated caster oils, polyoxyethylene alkyl amines, alkyl alkanolamides, polyethylene glycols.

12. The aqueous dispersion of fine carbon fibers according to one of Claims 1 - 11, wherein the nonionic surfactant (B) comprises at least one of ethyleneoxide group - containing nonionic surfactants.

13. The aqueous dispersion of fine carbon fibers according to Claim 12, wherein the nonionic surfactant (B) is a polyoxyethylene alkyl ether or a derivative thereof.

14. The aqueous dispersion of fine carbon fibers according to Claim 12, wherein the nonionic surfactant (B) comprises at least one of compounds represented by the following general formula (1) : 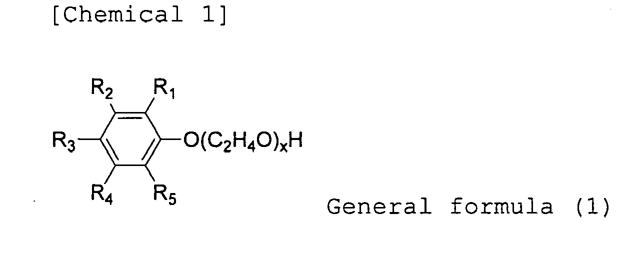 [wherein R₁ - R₅ represent hydrogen atom, non-substituted or substituted alkyl group having 1 - 30 carbon atoms, hydroxyl group, non-substituted or substituted hydroxy alkyl group, non-substituted or substituted 1-phenyl-ethyl group, or non-substituted or substituted benzyl group, mutually independently; the number of hydrogen atom(s) substituted to R₁ - R₅ is 0 to 4; and X represents the average number of moles of EO and is in the range of 1 - 100.].

15. The aqueous dispersion of fine carbon fibers according to Claim 14, wherein the nonionic surfactant (B) comprises at least one of compounds which have a structural unit represented by the following general formula (2): 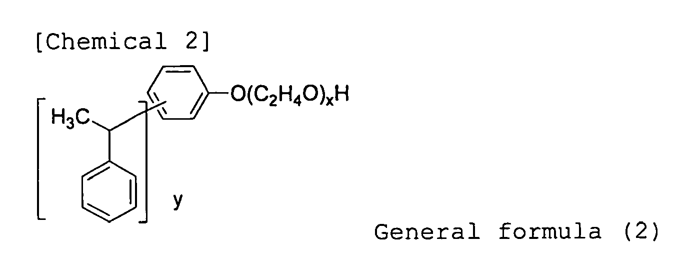 [wherein X represents the average number of moles of EO and is in the range of 1 - 100; and y represents the number of substitution and is in the range of 1 - 3.].

16. The aqueous dispersion of fine carbon fibers according to Claim 14, wherein the nonionic surfactant (B) comprises at least one of compounds which have a structural unit represented by the following general formula (3): 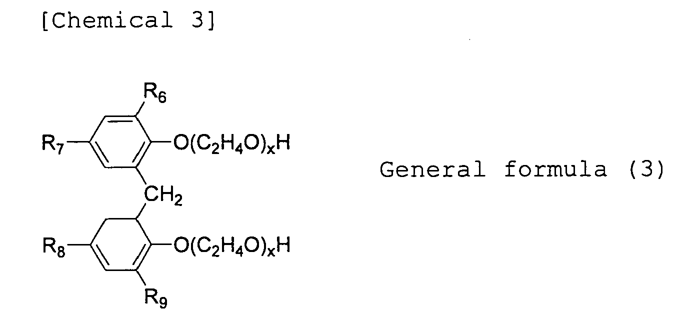 [wherein R₆ - R₉ represent hydrogen atom, non-substituted or substituted alkyl group having 1 - 30 carbon atoms, hydroxyl group, non-substituted or substituted hydroxy alkyl group, or non-substituted or substituted 1-phenyl-ethyl group, mutually independently; the number of hydrogen atom(s) substituted to R₆ - R₉ is 0 to 4; and X represents the average number of moles of EO and is in the range of 1 - 100.].

17. The aqueous dispersion of fine carbon fibers according to one of Claims 2 - 16, wherein the anionic surfactant (C) is a benzyl skeleton - containing anionic surfactant.

18. The aqueous dispersion of fine carbon fibers according to one of Claims 2 - 17, wherein the anionic surfactant (C) is a benzyl skeleton - containing sulfate ester salt type anionic surfactant.

19. The aqueous dispersion of fine carbon fibers according to one of Claims 2 - 18, wherein the anionic surfactant (C) comprises at least one of compounds which have a structural unit represented by the following general formula (4): 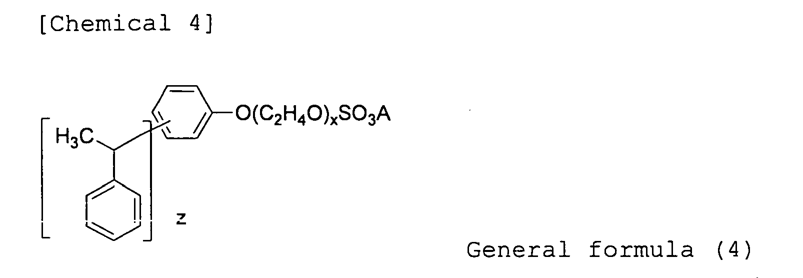 [wherein A represents sodium, potassium, or ammonium, X represents the average number of moles of EO and is in the range of 1 - 100; and z represents the number of substitution and is in the range of 1 - 3.].

20. The aqueous dispersion of fine carbon fibers according to one of Claims 1 - 19, wherein at least one of coloring agent, deforming agent and water-soluble polymer is further added to the aqueous dispersions of fine carbon fibers.

21. The aqueous dispersion of fine carbon fibers according to one of Claims 1 - 20, wherein the fine carbon fibers comprise fine carbon fibers having a mean fiber diameter in the range of 0.5 - 200 nm.

22. The aqueous dispersion of fine carbon fibers according to Claim 21, wherein the fine carbon fibers are single-layered fine carbon fibers, double-layered fine carbon fibers or multi-layered fine carbon fibers.

23. The aqueous dispersion of fine carbon fibers according to Claim 20 or Claim 22, wherein the fine carbon fibers comprise carbon fibrous structures each of which comprises a three dimensional network of carbon fibers, each of the carbon fibers having an fiber diameter of 15 - 130 nm, wherein the carbon fibrous structure further comprises a granular part, at which the carbon fibers are bound in a state that the carbon fibers are extended outwardly therefrom, and wherein the granular part is produced in a growth process of the carbon fibers, and has a size of not less than 1.3 times of the fiber diameter of the fine carbon fiber.

24. An article to which electroconductivity is given by treating it with the aqueous dispersions of fine carbon fibers according to one of Claims 1 - 22, and thus allowing it to contain the fine carbon fibers on its surface and/or in its interior.

25. A method for preparing aqueous dispersion of fine carbon fibers, which comprises a step of subjecting the fine carbon fibers to dispersing treatment or disintegrating treatment with an anionic surfactant (A), and a further step of subjecting the fine carbon fibers to another dispersing treatment on the condition of adding a nonionic surfactant (B) or an anionic surfactant (C) which has a higher steric hindrance structure than the structure of the anionic surfactant (A).

26. The method for preparing aqueous dispersion of fine carbon fibers according to Claim 25, wherein the fine carbon fibers undergo the another dispersing treatment on the condition of adding the nonionic surfactant (B) or the anionic surfactant (C) which has a higher steric hindrance structure than the structure of the anionic surfactant (A), after the fine carbon fibers undergo the step of the dispersing treatment or disintegrating treatment with the anionic surfactant (A) and a step of obtaining aqueous solution in which the fine carbon fibers are recohered.

27. The method for preparing aqueous dispersion of fine carbon fibers, which comprises a step of subjecting the fine carbon fibers to dispersing treatment or disintegrating treatment with the anionic surfactant (A), and a further step of subjecting the fine carbon fibers to another dispersing treatment on the condition of adding the nonionic surfactant (B) and the anionic surfactant (C) which has a higher steric hindrance structure than the structure of the anionic surfactant (A).

28. The method for preparing aqueous dispersion of fine carbon fibers according to Claim 27, wherein the fine carbon fibers undergo the another dispersing treatment on the condition of adding the nonionic surfactant (B) and the anionic surfactant (C) which has a higher steric hindrance structure than the structure of the anionic surfactant (A), after the fine carbon fibers undergo the step of the dispersing treatment or disintegrating treatment with the anionic surfactant (A) and a step of obtaining aqueous solution in which the fine carbon fibers are recohered.

29. A method for preparing an aqueous dispersions of fine carbon fibers, which comprises a step of subjecting the fine carbon fibers to dispersing treatment or disintegrating treatment with the anionic surfactant (A) and the nonionic surfactant (B) or the anionic surfactant (C) which has a higher steric hindrance structure than the structure of the anionic surfactant (A), and a further step of subjecting the fine carbon fibers to another dispersing treatment on the condition of adding the anionic surfactant (C) or the nonionic surfactant (B).

30. The method for preparing aqueous dispersion of fine carbon fibers according to Claim 29, wherein the fine carbon fibers undergo the another dispersing treatment on the condition of adding the anionic surfactant (C) or the nonionic surfactant (B), after the fine carbon fibers undergo the step of the dispersing treatment or disintegrating treatment with the anionic surfactant (A) and the nonionic surfactant (B) or the anionic surfactant (C) which has a higher steric hindrance structure than the structure of the anionic surfactant (A) and a step of obtaining aqueous solution in which the fine carbon fibers are recohered.

31. A method for preparing an aqueous dispersions of fine carbon fibers, which comprises a step of subjecting the fine carbon fibers to dispersing treatment or disintegrating treatment with the anionic surfactant (A) and the nonionic surfactant (B) or the anionic surfactant (C) which has a higher steric hindrance structure than the structure of the anionic surfactant (A).

32. A method for preparing an aqueous dispersions of fine carbon fibers, which comprises a step of subjecting the fine carbon fibers to dispersing treatment or disintegrating treatment with the anionic surfactant (A) and the nonionic surfactant (B) and the anionic surfactant (C) which has a higher steric hindrance structure than the structure of the anionic surfactant (A).
